(19) Europäisches Patentamt
European Patent Office
Office européen des brevets

(11) **EP 4 697 610 A1**

(12) **EUROPEAN PATENT APPLICATION**
published in accordance with Art. 153(4) EPC

(43) Date of publication:
**18.02.2026 Bulletin 2026/08**

(21) Application number: **25729442.1**

(22) Date of filing: **02.06.2025**

(51) International Patent Classification (IPC):
*H04B 1/40* [(2015.01)]     *H04B 7/06* [(2006.01)]
*H04B 1/3827* [(2015.01)]     *H04B 17/20* [(2015.01)]
*H04W 52/36* [(2009.01)]     *H04B 1/04* [(2006.01)]

(86) International application number:
**PCT/KR2025/007556**

(87) International publication number:
**WO 2026/005320 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.06.2024 KR 20240081718
23.08.2024 KR 20240113288**

(71) Applicant: **SAMSUNG ELECTRONICS CO., LTD.
Yeongtong-gu
Suwon-si, Gyeonggi-do 16677 (KR)**

(72) Inventors:
• **JANG, Kyujae**
  **Suwon-si, Gyeonggi-do 16677 (KR)**
• **KIM, Dohun**
  **Suwon-si, Gyeonggi-do 16677 (KR)**
• **PARK, Heejin**
  **Suwon-si, Gyeonggi-do 16677 (KR)**
• **JO, Daeyoung**
  **Suwon-si, Gyeonggi-do 16677 (KR)**
• **JIN, Taekyoung**
  **Suwon-si, Gyeonggi-do 16677 (KR)**

(74) Representative: **HGF
HGF Limited
4th Floor, 1 City Square
Leeds LS1 2ES (GB)**

(54) **ELECTRONIC DEVICE FOR CHANGING RF PATH ON BASIS OF SAR, AND OPERATING METHOD**

(57)     According to various embodiments, an electronic device, may include a first radio frequency (RF) circuit including a first amplifier, a second RF circuit including a second amplifier, and a plurality of antennas, at least one processor, and memory storing instructions, and the instructions, when executed by the at least one processor, may cause the electronic device to transmit first signals to a first antenna among the plurality of antennas through a first RF path that uses the first RF circuit, transmit second signals to a second antenna among the plurality of antennas through a second RF path that uses the second RF circuit, identify that a first condition for switching an antenna based on a specific absorption rate (SAR) limit is satisfied, while concurrently transmitting the first signals and the second signals, identify a first power difference between a maximum transmittable power of the first signals and a backoff maximum power related to SAR backoff of the first signals, and a second power difference between a maximum transmittable power of the second signals and a backoff maximum power related to SAR backoff of the second signals, and control so as to change the first RF path for transmitting the first signals, to a third RF path associated with a third antenna among the plurality of antennas based on identifying that the first power difference is greater than the second power difference and that the first condition is satisfied, wherein a first distance between the first antenna and the second antenna is less than a first threshold distance , and a second distance between the first antenna and the third antenna is greater than or equal to a second threshold distance.

FIG. 11

**Description**

[Technical Field]

The disclosure relates to an electronic device that changes a transmission radio frequency (RF) path based on a specific absorption rate (SAR), and an operation method thereof.

[Background Art]

A user equipment (UE) may transmit electromagnetic waves for data transmission or reception with a base station. Electromagnetic waves emitted from a UE may badly affect human bodies, and many of the institutes at home and abroad are trying to restrict the negative influence of the electromagnetic waves on human bodies. For example, a specific absorption rate (SAR) is a numerical value indicating how much electromagnetic waves, emitted from a mobile communication terminal, is absorbed by a human body. An SAR is expressed in a unit of KW/g (or mW/g), and may indicate the amount of power absorbed per 1g of a human body. Since the issue of a baneful influence of electromagnetic waves has arisen, the standard for an SAR limit associated with a mobile communication terminal has defined.
When an SAR estimated based on a transmission power is expected to exceed a threshold, a UE may back off a maximum transmittable power (or maximum transmission power limit (MTPL)). For example, when a predetermined event (e.g., grip, hot-spot, proxy) is identified as occurring, a UE may transmit a communication signal at a backoff power corresponding to the corresponding event, or may transmit a communication signal at a transmission power configured based on a backed-off maximum transmittable power (or MTPL).
In addition, a technology that backs off a maximum transmittable power (or MTPL) based on the total amount of SAR values accumulated during a predetermined period of time (or an average value of SARs occurring during a predetermined period of time) is being used. An SAR that affects a human body on average, as well as, an SAR that instantaneously affects a human body, needs to be taken into consideration. Accordingly, backoff of a maximum transmittable power (or MTPL) may be performed when a total cumulative SAR value (or an average value of SARs occurring during a predetermined period of time) satisfies a designated condition.
The above-described information may be provided as related art for the purpose of assisting in understanding the disclosure. No assertion or decision is made as to whether any of the above might be applicable as prior art with regard to the disclosure.

[Detailed Description of the Invention]

[Technical Solution]

Where a backoff occurs due to an SAR, a Tx/Rx blanking time may occur. During the Tx/Rx blanking time data transmission and reception may not occur, and this may cause interruptions to services from the user equipment. In some circumstances, these interruptions may be perceptible to the user, and as such it may be helpful to minimize any interruptions to the transmission and reception of data.
According to various embodiments, an electronic device may include a first radio frequency (RF) circuit including a first amplifier, a second RF circuit including a second amplifier, a plurality of antennas, at least one processor, and memory storing the instructions. The instructions, when executed by the at least one processor, may cause the electronic device to transmit first signals to a first antenna among the plurality of antennas, through a first RF path that uses the first RF circuit. The instructions, when executed by the at least one processor, may cause the electronic device to transmit second signals to a second antenna among the plurality of antennas through a second RF path that uses the second RF circuit. The instructions, when executed by the at least one processor, may cause the electronic device to identify that a first condition for switching an antenna based on a specific absorption rate (SAR) limit is satisfied, while concurrently transmitting the first signals and the second signals. The instructions, when executed by the at least one processor, may cause the electronic device to identify a first power difference between a maximum transmittable power of the first signals and a backoff maximum power related to SAR backoff of the first signals, and a second power difference between a maximum transmittable power of the second signals and a backoff maximum power related to SAR backoff of the second signals. The instructions, when executed by the at least one processor, may cause the electronic device to perform control so as to change the first RF path for transmitting the first signals, to a third RF path associated with a third antenna among the plurality of antennas, based on identifying that the first power difference is greater than the second power difference and that the first condition is satisfied. A first distance between the first antenna and the second antenna is less than a first threshold distance, and a distance between the first antenna and the third antenna is greater than or equal to a second threshold distance. The second threshold distance is greater than or equal to the first threshold distance.
According to various embodiments, an operation method of an electronic device, including a first radio frequency (RF) circuit including a first amplifier, a second RF circuit including a second amplifier, and a plurality of antennas, may include an operation of transmitting first signals to a first antenna among the plurality of antennas through a first RF path that uses the first RF circuit. The operation method of the electronic device may include an operation of transmitting second signals to a second antenna among the plurality of antennas through a second RF path that uses the second RF circuit. The operation method of the electronic device may include an operation of identifying that a first condition for switching an antenna based on a specific absorption rate (SAR) limit is satisfied, while concurrently transmitting the first signals and the second signals. The operation method of the electronic device may include an operation of identifying a first power difference between a maximum transmittable power of the first signals and a backoff maximum power related to SAR backoff of the first signals, and a second power difference between a maximum transmittable power of the second signals and a backoff maximum power related to SAR backoff of the second signals. The operation method of the electronic device may include an operation of performing control so as to change the first RF path for transmitting the first signals, to a third RF path associated with a third antenna among the plurality of antennas, based on identifying that the first power difference is greater than the second power difference and that the first condition is satisfied. A first distance between the first antenna and the second antenna is less than a first threshold distance, and a distance between the first antenna and the third antenna is greater than or equal to a second threshold distance. The second threshold distance is greater than or equal to the first threshold distance.

According to various embodiments, in a computer-readable storage medium storing at least one instruction, the at least one instruction, when executed by a processor of an electronic device, may cause the electronic device to perform at least one operation. The at least one operation may include an operation of transmitting first signals to a first antenna among a plurality of antennas through a first RF path that uses a first radio frequency (RF) circuit including a first amplifier. The at least one operation may include an operation of transmitting second signals to a second antenna among the plurality of antennas through a second RF path that uses a second RF circuit including a second amplifier. The at least one operation may include an operation of identifying that a first condition for switching an antenna based on a specific absorption rate (SAR) limit is satisfied, while concurrently transmitting the first signals and the second signals. The at least one operation may include an operation of identifying a first power difference between a maximum transmittable power of the first signals and a backoff maximum power related to SAR backoff of the first signals, and a second power difference between a maximum transmittable power of the second signals and a backoff maximum power related to SAR backoff of the second signals. The at least one operation may include an operation of performing control so as to change the first RF path for transmitting the first signals, to a third RF path associated with a third antenna among the plurality of antennas, based on identifying that the first power difference is greater than the second power difference and that the first condition is satisfied. A first distance between the first antenna and the second antenna is less than a first threshold distance, and a distance between the first antenna and the third antenna is greater than or equal to a second threshold distance. The second threshold distance is greater than or equal to the first threshold distance.

[Brief Description of Drawings]

FIG. 1 is a block diagram illustrating an electronic device in a network environment according to various embodiments;
FIG. 2A is a block diagram of an electronic device for supporting legacy network communication and 5G network communication according to various embodiments;
FIG. 2B is a block diagram of an electronic device for supporting legacy network communication and 5G network communication according to various embodiments;
FIG. 3A is a flowchart illustrating an operation method of an electronic device according to various embodiments;
FIG. 3B is a diagram illustrating a transmission power and an SAR over time according to various embodiments;
FIG. 4A is a graph of a transmission power over time according to various embodiments;
FIG. 4B is a graph of a transmission power over time according to various embodiments;
FIG. 4C is a graph of a transmission power over time according to various embodiments;
FIG. 4D is a table of a transmission power over time according to various embodiments;
FIG. 4E is a table of a transmission power over time according to various embodiments;
FIG. 5A is a block diagram illustrating a plurality of transmission paths of an electronic device according to various embodiments;
FIG. 5B is a block diagram illustrating a plurality of transmission paths of an electronic device according to various embodiments;
FIG. 5C is a block diagram illustrating a plurality of transmission paths of an electronic device according to various embodiments;
FIG. 5D is a block diagram illustrating a plurality of transmission paths of an electronic device according to various embodiments;

FIG. 6A is a block diagram illustrating a plurality of transmission paths of an electronic device according to various embodiments;

FIG. 6B is a block diagram illustrating a plurality of transmission paths of an electronic device according to various embodiments;

FIG. 7A is a flowchart illustrating an operation method of an electronic device according to various embodiments;

FIG. 7B is a diagram illustrating backoff according to various embodiments.

FIG. 8A is a diagram illustrating a signal transmitted or received by an electronic device according to various embodiments;

FIG. 8B is a diagram illustrating a signal transmitted or received by an electronic device according to various embodiments;

FIG. 9A is a graph illustrating a change in power of an EN-DC signal according to various embodiments;

FIG. 9B is a graph illustrating a change in power of an EN-DC signal according to various embodiments;

FIG. 10 is a diagram illustrating an antenna arrangement of an electronic device according to various embodiments;

FIG. 11 is a flowchart illustrating an operation method of an electronic device according to various embodiments;

FIG. 12 is a flowchart illustrating an operation method of an electronic device according to various embodiments;

FIG. 13 is a flowchart illustrating an operation method of an electronic device according to various embodiments;

FIG. 14 is a flowchart illustrating an operation method of an electronic device according to various embodiments;

FIG. 15 is a flowchart illustrating an operation method of an electronic device according to various embodiments;

FIG. 16 is a diagram illustrating an antenna arrangement of an electronic device of which the appearance is changeable according to various embodiments;

FIG. 17A is a diagram illustrating an antenna arrangement of an electronic device of which the appearance is changeable according to various embodiments; and

FIG. 17B is a diagram illustrating an antenna arrangement of an electronic device of which the appearance is changeable according to various embodiments.

[Mode for Carrying out the Invention]

Hereinafter, embodiments of the disclosure will be described in detail with reference to the drawings so that those skilled in the art to which the disclosure pertains can easily implement the disclosure. However, the disclosure may be implemented in various forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

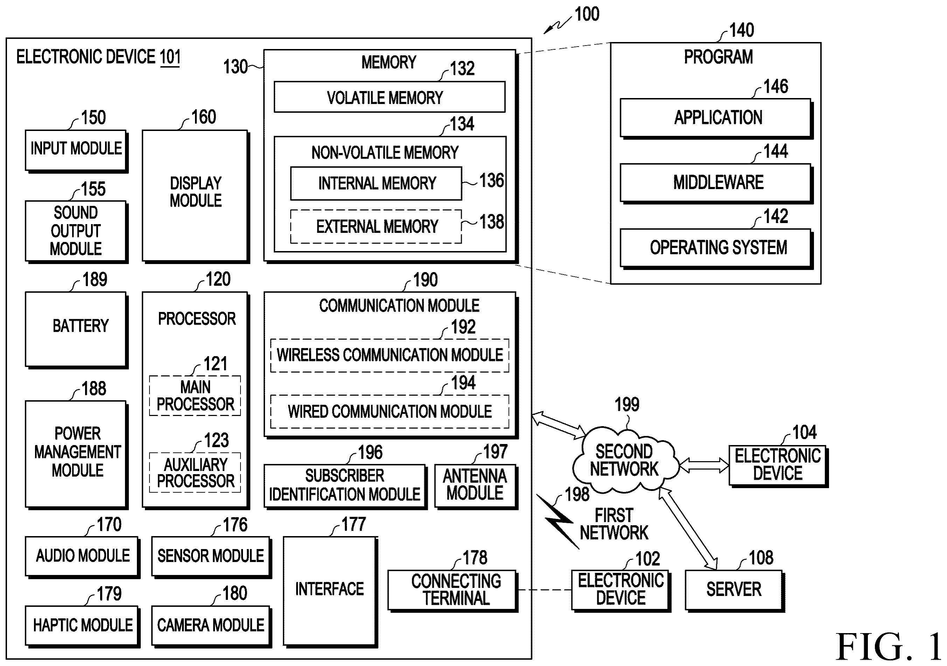

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

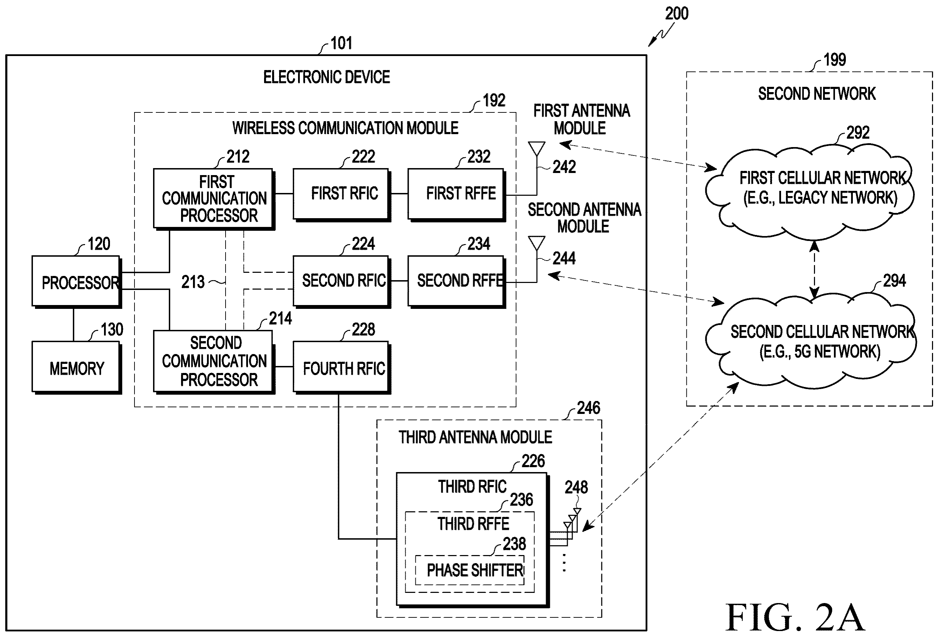

FIG. 2A is a block diagram 200 of the electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include the processor 120 and the memory 130. The second network 199 may include a first cellular network 292 and a second cellular network 294. According to another embodiment, the electronic device 101 may further include at least one component among the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a part of the wireless communication module 192. According to another embodiment, the fourth RFIC 228 may be omitted, or may be included as a part of the third RFIC 226.

The first communication processor 212 may establish a communication channel of a band to be used for wireless communication with the first cellular network 292, and may support legacy network communication via the established communication channel. According to various embodiments, the first cellular network may be a legacy network including a 2G, 3G, 4G, or long term evolution (LTE) network. The second communication processor 214 may establish a communication channel corresponding to a designated band (e.g., approximately 6GHz to 60GHz) among bands to be used for wireless communication with the second cellular network 294, and may support 5G network communication via the established communication channel. According to various embodiments, the second cellular network 294 may be a 5G network defined in 3GPP. Additionally, according to an embodiment, the first communication processor 212 or the second communication processor 214 may establish a communication channel corresponding to another designated band (e.g., approximately 6GHz or less) among the bands to be used for wireless communication with the second cellular network 294, and may support 5G network communication via the established communication channel.

The first communication processor 212 may perform data transmission or reception with the second communication processor 214. For example, data, which has been classified to be transmitted via the second cellular network 294, may be changed to be transmitted via the first cellular network 292. In this instance, the first communication processor 212 may receive transmission data from the second communication processor 214. For example, the first communication processor 212 may perform data transmission or reception with the second communication processor 214 via an inter-processor interface 213. The inter-processor interface 213 may be embodied as, for example, a universal asynchronous receiver/transmitter (UART) (e.g., high speed-UART (HS-UART) or a peripheral component interconnect bus express (PCIe) interface, but the type of interface is not limited. Alternatively, the first communication processor 212 and the second communication processor 214, for example, may exchange control information and packet data information by using shared memory. The first communication processor 212 may perform transmission or reception of various types of information such as sensing information, information associated with an output strength, and resource block (RB) allocation information, with the second communication processor 214.

Depending on the embodiment, the first communication processor 212 may not be directly connected to the second communication processor 214. In this instance, the first communication processor 212 may perform data transmission or reception with the second communication processor 214, via the processor 120 (e.g., application processor). For example, the first communication processor 212 and the second communication processor 214 may perform data transmission or reception with the processor 120 (e.g., application processor) via a HS-UART interface or a PCIe interface, but the type of interface is not limited. Alternatively, the first communication processor 212 and the second communication processor 214 may exchange control information and packet data information with the processor 120 (e.g., application processor) by using shared memory.

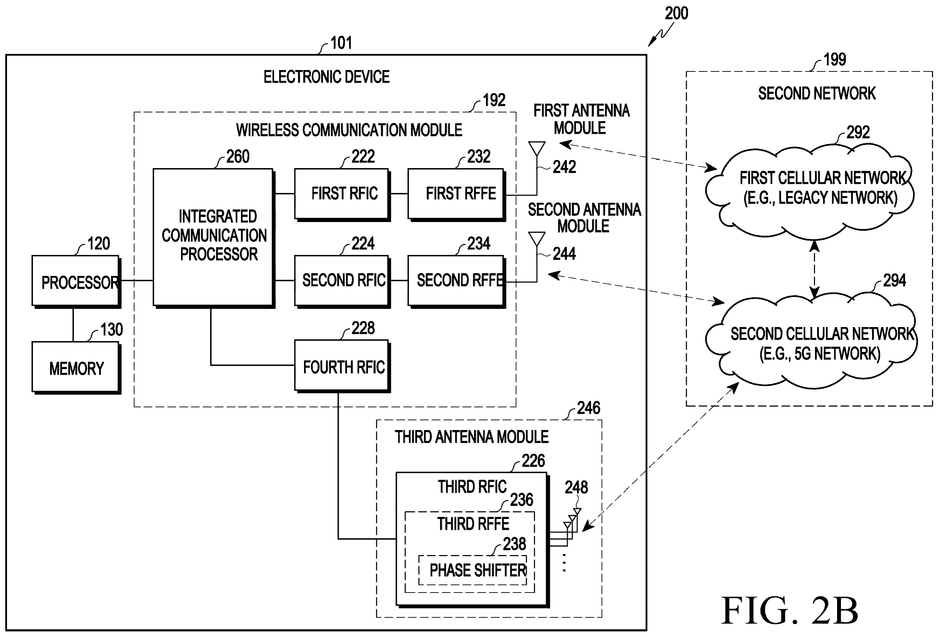

According to an embodiment, the first communication processor 212 and the second communication processor 214 may be embodied in a single chip or a single package. According to various embodiments, the first communication processor 212 or the second communication processor 214 may be embodied in a single chip or a single package, together with the processor 120, the sub-processor 123, or the communication module 190. For example, as illustrated in FIG. 2B, an integrated communication processor 260 may support all functions for communication with the first cellular network 292 and the second cellular network 294.

In the case of transmission, the first RFIC 222 may convert a baseband signal generated by the first communication processor 212 into a radio frequency (RF) signal in the range of approximately 700MHz to 3GHz, which is used for the first cellular network 292 (e.g., legacy network). In the case of reception, an RF signal may be obtained from the first network 292 (e.g., legacy network) via an antenna (e.g., first antenna module 242), and may be preprocessed via an RFFE (e.g., first RFFE 232). The first RFIC 222 may convert the preprocessed RF signal into a baseband signal, so as to enable the signal to be processed by the first communication processor 212.

In the case of transmission, the second RFIC 224 may convert a baseband signal generated by the first communication processor 212 or the second communication processor 214 into an RF signal (hereinafter, 5G Sub6 RF signal) in an Sub6 band (e.g., approximately 6GHz or less) used in the second cellular network 294 (e.g., 5G network). In the case of reception, a 5G Sub6 RF signal may be obtained from the second cellular network 294 (e.g., 5G network) via an antenna (e.g., second antenna module 244), and may be preprocessed by an RFFE (e.g., second RFFE 234). The second RFIC 224 may convert the preprocessed 5G Sub6 RF signal into a baseband signal, so as to enable the signal to be processed by a corresponding communication processor among the first communication processor 212 or the second communication processor 214.

The third RFIC 226 may convert a baseband signal generated by the second communication processor 214 into an RF signal (hereinafter, 5G Above6 RF signal) of a 5G Above6 band (e.g., approximately 6GHz to 60GHz) to be used for the second cellular network 294 (e.g., 5G network). In the case of reception, a 5G Above6 RF signal may be obtained from the second cellular network 294 (e.g., 5G network) via an antenna (e.g., antenna 248), and may be preprocessed by the third RFFE 236. The third RFIC 226 may convert the preprocessed 5G Above6 RF signal into a baseband signal, so as to enable the signal to be processed by the second communication processor 214. According to an embodiment, the third RFFE 236 may be configured as a part of the third RFIC 226.

The electronic device 101, according to an embodiment, may include the fourth RFIC 228, separately from the third RFIC 226 or as a part of the third RFIC 226. In this instance, the fourth RFIC 228 may convert the baseband signal generated by the second communication processor 214 into an RF signal (hereinafter, IF signal) in an intermediate frequency band (e.g., approximately 9GHz to 11GHz), and may transfer the IF signal to the third RFIC 226. The third RFIC 226 may convert the IF signal into a 5G Above6 RF signal. In the case of reception, a 5G Above6 RF signal may be received from the second cellular network 294 (e.g., 5G network) via an antenna (e.g., antenna 248), and may be converted into an IF signal by the third RFIC 226. The fourth RFIC 228 may convert the IF signal into a baseband signal so that the second communication processor 214 may process the signal.

According to an embodiment, the first RFIC 222 and the second RFIC 224 may be embodied as at least a part of a single chip or a single package. According to various embodiments, if the first RFIC 222 and the second RFIC 224 are embodied as a single chip or a single package in FIG. 2A or FIG. 2B, they may be embodied as an integrated RFIC. In this instance, the integrated RFIC may be connected to the first RFFE 232 and the second RFFE 234, may convert a baseband signal into a signal in a band supported by the first RFFE 232 and/or the second RFFE 234, and may transmit the converted signal to one of the first RFFE 232 and the second RFFE 234. According to an embodiment, the first RFFE 232 and the second RFFE 234 may be embodied as a single chip or at least a part of the single package. According to an embodiment, at least one of the first antenna module 242 or the second antenna module 244 may be omitted or may be combined with another antenna module, and may process RF signals of a plurality of corresponding bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 may be disposed in a part (e.g., lower part) of a second substrate (e.g., sub PCB) different from the first substrate, and the antenna 248 may be disposed in another part (e.g., upper part), so that the third antenna module 246 may be formed. By disposing the third RFIC 226 and the antenna 248 in the same substrate, the length of a transmission line therebetween may be reduced. For example, this may reduce a loss (e.g., diminution) of a high-frequency band signal (e.g., approximately 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be configured as an antenna array including a plurality of antenna elements which may be used for beamforming. In this instance, the third RFIC 226, for example, may be a part of the third RFFE 236, and may include a plurality of phase shifters 238 corresponding to a plurality of antenna elements. In the case of transmission, each of the plurality of phase shifters 238 may shift the phase of a 5G Above6 RF signal to be transmitted to the outside of the electronic device 101 (e.g., a base station of the 5G network) via a corresponding antenna element. In the case of reception, each of the plurality of phase shifters 238 may shift the phase of a 5G Above6 RF signal received from the outside via a corresponding antenna element into the same or substantially the same phase. This may enable transmission or reception via beamforming between the electronic device 101 and the outside.

The second cellular network 294 (e.g., 5G network) may operate independently (e.g., standalone (SA)) from the first cellular network 292 (e.g., legacy network), or may operate by being connected thereto (e.g., non-standalone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access the access network of the 5G network, and may access an external network (e.g., the Internet) under the control of the core network (e.g., evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., the processor 120, the first communication processor 212, or the second communication processor 214).

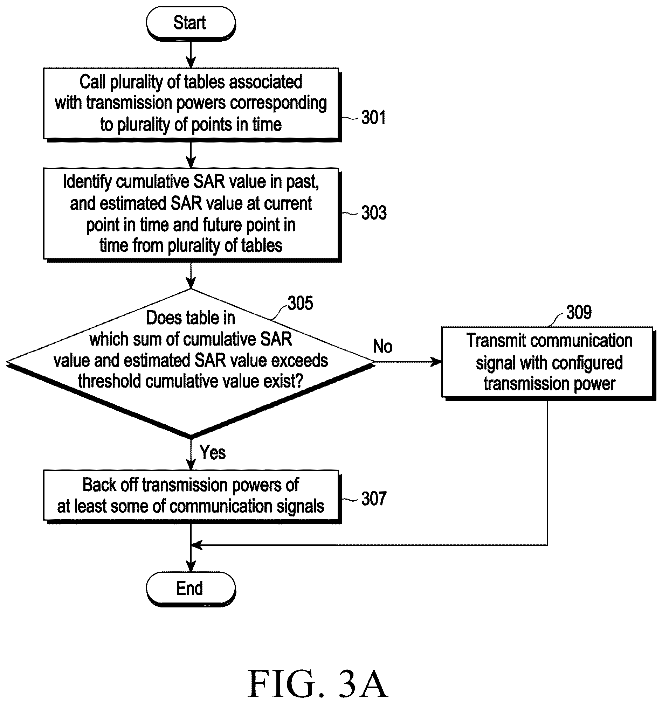

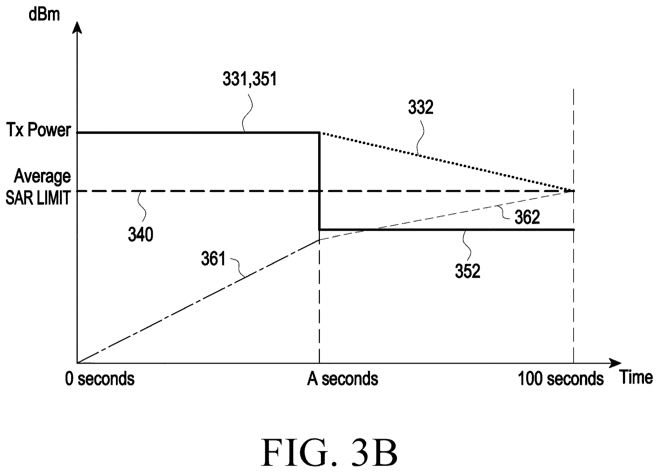

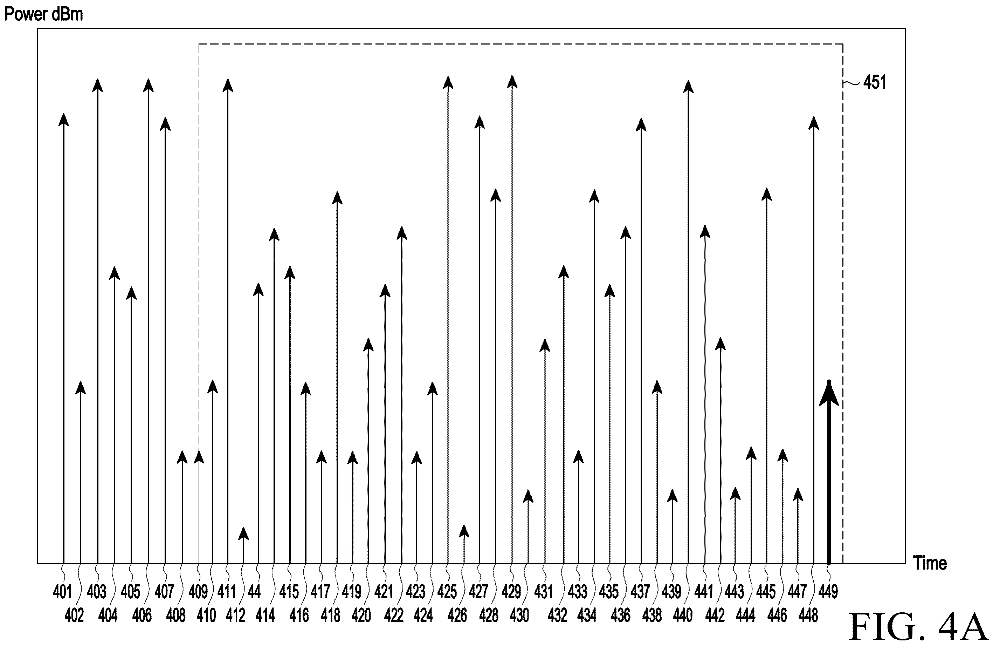

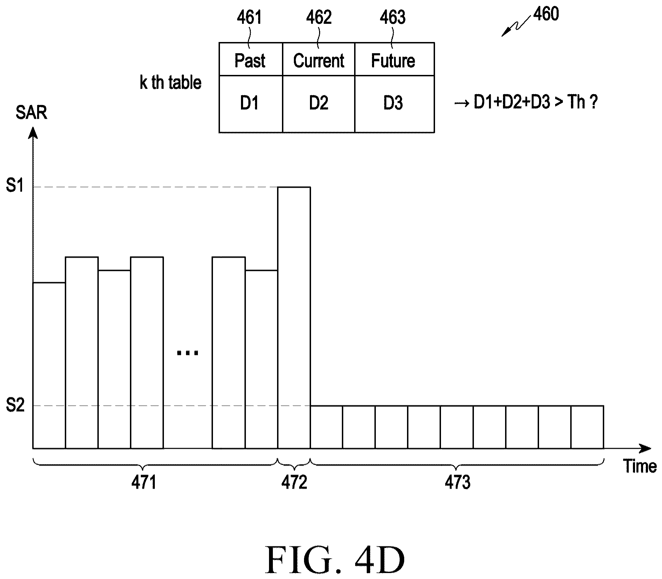

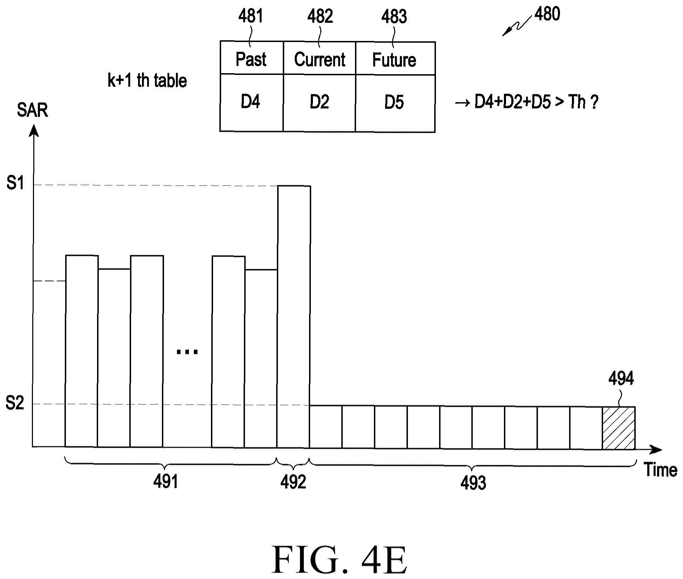

FIG. 3A is a flowchart illustrating an operation method of an electronic device according to various embodiments. The embodiment of FIG. 3A will be described with reference to FIGS. 3B, 4A to 4E. FIG. 3B is a diagram illustrating a transmission power and an SAR over time according to various embodiments. FIGS. 4A to 4C are graphs illustrating a transmission power over time according to various embodiments. FIGS. 4D and 4E are tables of a transmission power over time according to various embodiments.

According to various embodiments, the electronic device 101 (e.g., at least one of the processor 120, the first communication processor 212, the second communication processor 214, or the integrated communication processor 260) may call a plurality of tables associated with transmission powers corresponding to a plurality of points in time in operation 301. According to an embodiment, before describing an embodiment associated with FIG. 3A, terms in Table 1 shown below are defined.

[Table 1]

| a. Normal MAX Power: a maximum transmission power when a margin of an SAR exists. |
| --- |
| b. Normal Max SAR: a magnitude of an SAR occurring in the case of operation at a normal MAX power.<br>c. Backoff MAX Power: a maximum transmission power when backoff is performed since a margin of an SAR is insufficient.<br>d. Backoff Max SAR: a magnitude of an SAR occurring in the case of operation ata backoff Max power.<br>e. Measurement Time(T): a time for calculating a cumulative SAR or an average SAR.<br>f. Measurement Period(P): a period (or time interval) for calculating an SAR.<br>g. Number of Tables for Calculating SAR: T/P - 1.<br>h. Average SAR LIMIT: a maximum value to which an average SAR is limited during T.<br>i. Average Time(A_Time): a time of measuring SARs cumulatively.<br>j. Cumulative SAR: a sum of SARs accumulated during an average time.<br>k. Max Cumulative SAR: average SAR LIMIT IMITe SAR ive time.<br>l. Average SAR: a magnitude of an average SAR used during an average time.<br>m. Tx Room: Max cumulative SAR nitude of an average SAR used during veling.<br>n. Remain Time(R_Time): an entire measurement time - a time (A_Time) spent in measuring an SAR upto the present. |

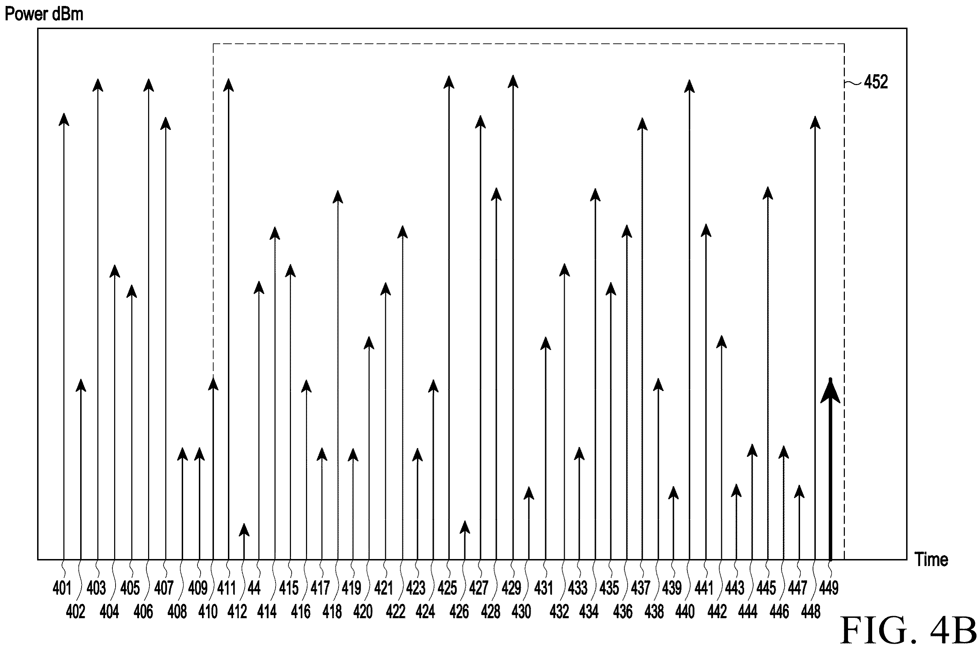

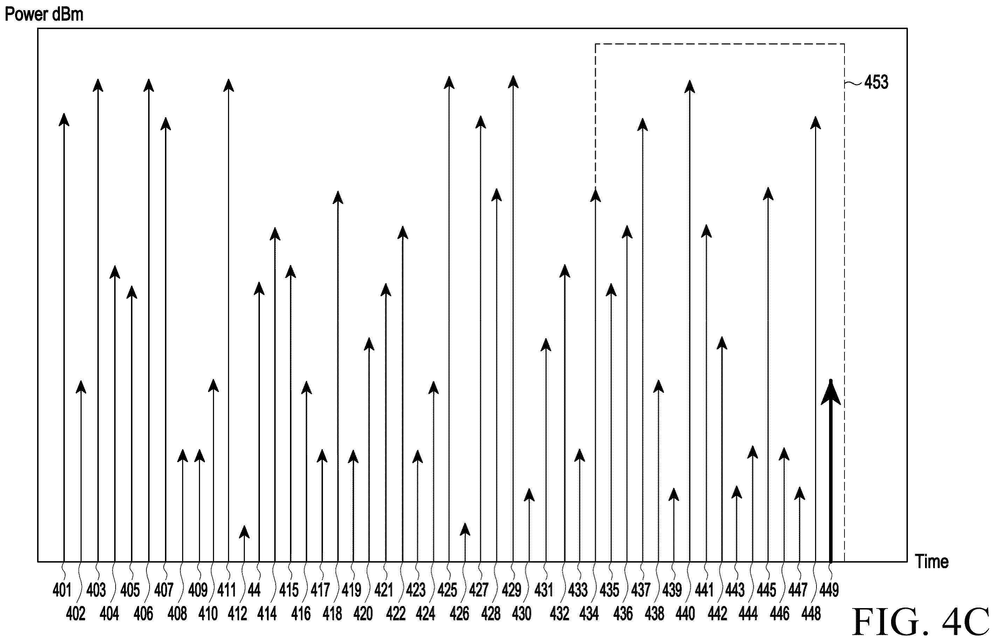

In order to describe the table, reference will be made to FIGS. 4A to 4C. Referring to FIG. 4A, there is provided a graph including transmission powers associated with a plurality of points 401 to 449 in time. A cumulative SAR (e.g., cumulative SAR in Table 1) during a measurement time (e.g., measurement time (T) in Table 1), for example, a measurement time including fifty points in time may be configured to maintain its value less than or equal to a maximum cumulative SAR (e.g., Max cumulative SAR in Table 1). For example, the electronic device 101 may determine a transmission power of a communication signal to be transmitted at the current point 449 in time so that a cumulative SAR, obtained based on a cumulative SAR corresponding to the current point 449 in time and past points 409 to 448 in time (e.g., average time in Table 1) and a cumulative SAR corresponding to nine future points (not illustrated) in time (e.g., remain time in Table 1), are maintained as a value less than or equal to the maximum cumulative SAR. In addition, as illustrated in FIG. 4B, the electronic device 101 may identify transmission powers 452 shifted by one point in time from the transmission powers 451 at the current point 449 in time and the past points 409 to 448 in time of FIG. 4A. Shifting by one point in time may mean that data at the earliest point in time in the past (e.g., the point 409 of FIG. 4A) is not applied. The number of transmission powers 452 at the current point 449 in time and the past points 410 to 448 in time is forty, and may be one smaller than forty one which is the number of transmission powers 451 of FIG. 4A. The electronic device 101 may determine the transmission power at the current point 449 in time so that the sum of SARs at the transmission powers 452 and SARs estimated at ten additional future points in time is maintained as a value less than or equal to the maximum cumulative SAR. As illustrated in FIG. 4C, the electronic device 101 may identify transmission powers 453 at the current point in time 449 and the past points 434 to 448 in time, which are shifted by twenty five points in time from the transmission powers 451. The number of the transmission powers 453 is sixteen, and may be twenty five smaller than forty one which is the number of the transmission powers 451 of FIG. 4A. The electronic device 101 may determine the transmission power at the current point 449 in time so that the sum of SARs at the transmission powers 453 and SARs estimated at additional thirty four future points in time is maintained as a value less than or equal to the maximum cumulative SAR. Although not illustrated, the electronic device 101 may manage a plurality of graphs which have one-shift differences from each other. A period for calculating an SAR is a measurement period (P) in Table 1, and for example, may be an interval between transmission powers shown in FIGS. 4A to 4C. The electronic device 101 may calculate and/or manage (T/P r equal to the maximum cumulative SAR. Hereinafter, with reference to FIGS. 4D and 4E, a configuration of identifying an estimated SAR value will be described.

Referring to FIG. 4D, the electronic device 101 may identify a $k^{th}$ SAR table 460. The $k^{th}$ SAR table 460 may include D1 that is a cumulative SAR value 461 corresponding to at least one past point in time, D2 that is a maximum SAR value 462 at a current point in time, and D3 that is an estimated SAR value 463 corresponding to at least one future point in time. Referring to a graph, a cumulative value of SAR values corresponding to the at least one point 461 in time may be D1. D1 that is the cumulative SAR value 461 corresponding to at least one past point in time may be identified based on an antenna configuration. The number of at least one past point in time may be one smaller than the total number of points in time (e.g., one hundred) corresponding to a measurement time (e.g., 50 seconds) in a first table. N that is the total number of points in time (e.g., one hundred) may be obtained by dividing the measurement time by a sampling interval (or a shift interval). Accordingly, in the $k^{th}$ table, the number of at least one past point in time may be k smaller than the total number of points in time. The electronic device 101 may identify D1 that is a cumulative SAR value of N-k past points 471 in time. The electronic device 101 may use a maximum value (S1) of an SAR for a current point 472 in time. The maximum value (S1) of an SAR (e.g., normal Max SAR in Table 1) may be an SAR value corresponding to a maximum transmission power (e.g., normal Max power in Table 1) designated by the electronic device 101. According to another embodiment, for the current point 472 in time, an SAR value at a point in time that is immediately before the current point 472 in time may be used. According to another embodiment, for the current point 472 in time, an average SAR value at the past points 471 in time of the current point 472 in time may be used. For at least one future point 473 in time, the electronic device 101 may calculate a sum of SAR values (S2) (e.g., backoff Max SAR in Table 1) at a backed-off transmission power (e.g., backoff MAX power in Table 1). The electronic device 101 may identify D3 as a cumulative SAR for at least one future point 473 in time. In the $k^{th}$ table, the number of the at least one future points in time may be k-1. Accordingly, with reference to the $k^{th}$ table, the electronic device 101 may identify whether the total sum (D1+D2+D3) of SARs corresponding to N points in time, which include the N-k past points in time, one current point in time, and k-1 future points in time, exceeds a maximum cumulative SAR. When it is identified as exceeding, the electronic device 101 may back off the transmission power of the current point in time. Referring to FIG. 4E, the electronic device 101 may identify a $k+1^{th}$ table 480. The electronic device 101 may identify D4 that is a cumulative SAR value 481 corresponding to at least one past point in time, D2 that is a maximum SAR value 482 at the current point in time, and D5 that is an estimated SAR value 483 corresponding to at least one future point, in the $k+1^{th}$ table 480. The electronic device 101 may identify whether a cumulative SAR value of D4+D2+D5 exceeds the maximum cumulative SAR. In the $k+1^{th}$ table, the number of at least one past points 491 in time may be one smaller than the number of at least one past points 471 in time in the $k^{th}$ table. In the $k+1^{th}$ table, the number of at least one future points 493 in time may be one 494 larger than the number of at least one future points 473 in time in the $k^{th}$ table.

According to various embodiments, in operation 303, the electronic device 101 may identify a cumulative SAR value in the past, and an estimated SAR value at the current point in time and a future point in time, with respect to a plurality of tables corresponding to at least one future point in time. With respect to the first table and a total of N-1 tables, shifted by i points in time (i is greater than or equal to 1 and less than N-2) from the first table, the electronic device 101 may identify a cumulative SAR value. In operation 305, the electronic device 101 may identify whether a table exists, in which a sum of a cumulative SAR value and an estimated SAR value exceeds a threshold. When a table in which the sum exceeds the threshold exists (Yes in operation 305), the electronic device 101 may back off one of transmission powers (or a maximum transmission power limit (MTPL)) of at least some of the communication signals in operation 307. Those skilled in the art may understand that the backoff of a transmission power in the document is replaced with the backoff of an MTPL. When a table in which the sum exceeding the threshold does not exist (No in operation 305), the electronic device 101 may transmit a communication signal at a configured transmission power in operation 309.

As described above, the electronic device 101 may determine a maximum value of a transmission power so that an average magnitude of SARs used during a measurement time does not exceed an average SAR LIMIT. Alternatively, the electronic device 101 may determine a maximum value of a transmission power so that a cumulative SAR during a measurement time does not exceed a Max cumulative SAR. The method of determining a maximum value of a transmission power by taking into consideration of SARs during a configured measurement time as described above may be referred to as a time averaged SAR (TAS), but it is not limited to the term. The electronic device 101 may determine a maximum value of a maximum power for a next time interval at every P time. A condition for operation at a normal MAX power during a next P time may be as follows.

- Condition: Tx room > SAR (normal Max SAR in Table 1)occurring in the case of operation at normal MAX power during next P + SAR (backoff MAX SAR in Table 1)occurring in the case of operation at backoff MAX power during (remain time - P) = P rinormal MAX SAR + (remain time - P) × backoff MAX SAR

In the condition, Tx room may be a value obtained by subtracting a cumulative SAR up to the present from a Max cumulative SAR. In the condition, (remain time - P) may be T - average time e T - average time verage SAR LIMIT. Alternatime that has been described with reference to FIGS. 4A to 4E. P may be a current point in time. The average time may be a past point in time. The fact that the condition is satisfied means that a table in which a cumulative SAR exceeds a Max cumulative SAR does not exist, although the electronic device 101 configures a maximum transmission power of a normal MAX power during a P time. The fact that the condition is not satisfied means that there is the probability of having a table in which a cumulative SAR exceeds a Max cumulative SAR exists when the electronic device 101 configures a maximum transmission power of a normal MAX power during a P time. In this instance, the electronic device 101 may configure a backoff MAX power as a maximum transmission power during the P time.

According to various embodiments, Table 2 below shows an example of variables and a condition.

[Table 2]

| [Example of Variable Configuration] |
| --- |
| i. Normal MAX Power: 23dBm |
| ii. Backoff MAX Power: 20dBm |
| iii. Measurement Time(T): 100 seconds |
| iv. Measurement Period(P): 0.5 seconds |
| v. Number of SAR Calculator tables: 199 |
| vi. Average SAR LIMIT : 1.5mW/g |
| vii. Max Cumulative SAR : 150mW/g |
| viii. Normal Max SAR => SAR at 23dBm: 2mW/g |
| ix. Backoff Max SAR => SAR at 20dBm: 1mW/g |
| [Point in time at which maximum power is switched from normal MAX power to backoff MAX power] a point in time at which average time genormal MAX power + (100 - average time) e backoff MAX power f MAX - in time at which power i = Average time n timW/g + (100 - average time) × 1mW/g ≤ 150 mW/g <=> Average time ge t |

In the example of Table 2, it is described that a maximum transmission power of a normal MAX power may be continuously usable during 50 seconds and backoff to a backoff MAX power is needed after 50 seconds. For example, it is assumed that an RF signal is transmitted at 23dBm which is a normal MAX power during 50 seconds, and an RF signal is transmitted at 23dBm which is a normal MAX power during a next P (0.5 seconds), and an RF signal is transmitted at 20dBm which is a backoff MAX power during 49.5 seconds corresponding to (remain time -P). In this instance, Tx room may be 150mW/g - 50 0 dsmW/g, and thus may be 50mW/g. An SAR occurring during a P time may be 2mW/g g stance, Tx room may be 150mW/g - 50 occurring during (remain time - P) may be 49.5 seconds × 1mW/g, and thus may be 49.5 mW/g. In this instance, a cumulative SAR during P and (remain time e 2mW/g g stancemW/g, and may exceed a Tx room. Therefore, it is identified that backoff of the maximum value of the transmission power at the P point in time is required. The above-described example will be described with reference to FIG. 3B that describes a transmission power associated with one RAT. For example, referring to FIG. 3B, it is identified that a maximum transmission power (Tx power) (or maximum transmittable power) (e.g., maximum transmission power limit (MTPL)) may be configured to a normal MAX power 351 up to A seconds (e.g., 50 seconds), but it is identified that it is backed off to a backoff MAX power 352 after A seconds. According to backoff of the maximum value of the transmission power, a slope of a second part 362 of a cumulative SAR may be formed to be lower than a slope of a first part 361 of the cumulative SAR. It is identified that an average SAR 331 from A seconds ago exceeds an average SAR LIMIT 340 but an average SAR 332 at a point in time at which a time reaches 100 seconds is identical to a value of the average SAR LIMIT 340 due to backoff. There may be a case in which the electronic device 101 performs transmission of RF signals for two or more RATs, which will be described later. For example, the electronic device 101 may transmit a first RF signal based on E-UTRA and a second RF signal based on NR, according to EN-DC. In this instance, the electronic device 101 may back off a maximum value of a transmission power of an RF signal so that a cumulative SAR does not exceed a MAX cumulative SAR. The electronic device 101 may configure priorities of RATs for backoff. For example, the electronic device 101 may be configured to preferentially back off a transmission power of an RF signal based on NR that is RAT corresponding to an SCG than E-UTRA that is RAT corresponding to an MCG. EN-DC is merely an example, and in the case of NE-DC, the electronic device 101 may be configured to preferentially back off a maximum value of a transmission power of an RF signal based on E-UTRA. Preferential backoff of a maximum value of a transmission power of an RF signal based on an SCG in DC is also an example, and the priority order for backoff is not limited. Alternatively, as another example, the electronic device 101 may be configured to preferentially back off a transmission power of an RF signal based on RAT corresponding to a frequency band in which a power limit (e.g., Plimit) is configured to be relatively lower according to a device state indicator (DSI) for each frequency band, among two or more RATs. A detailed description thereof will be provided later.

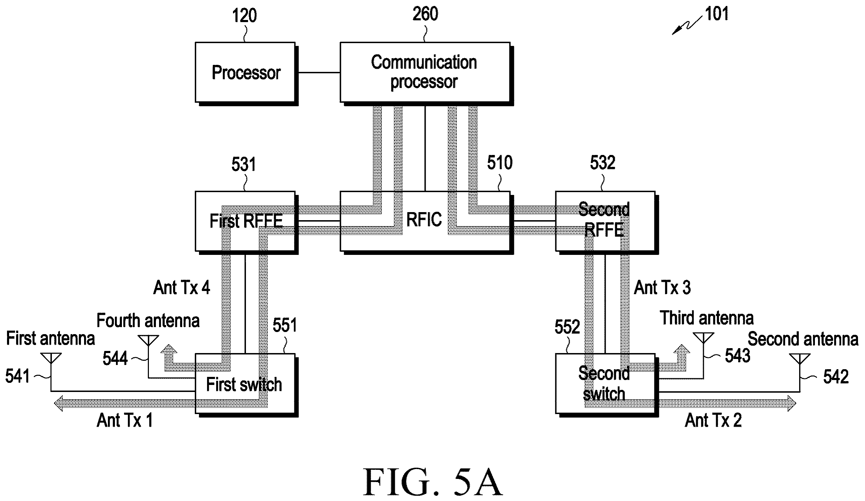

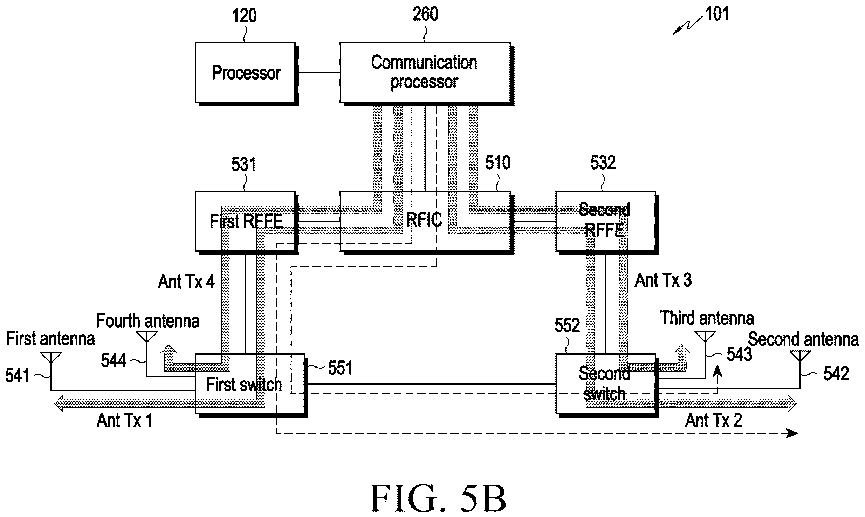

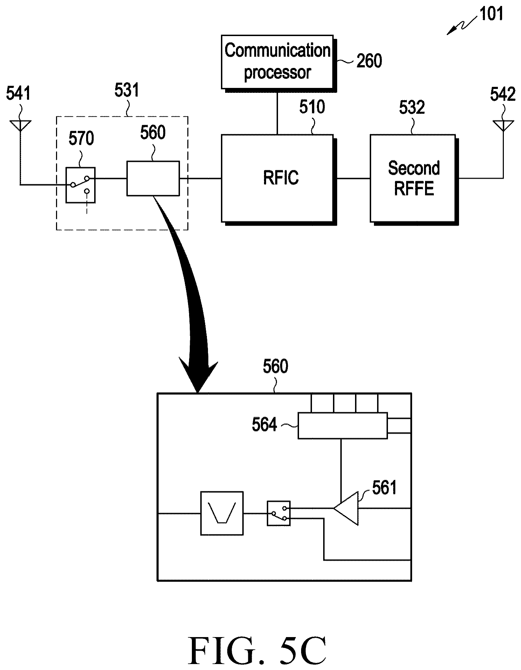

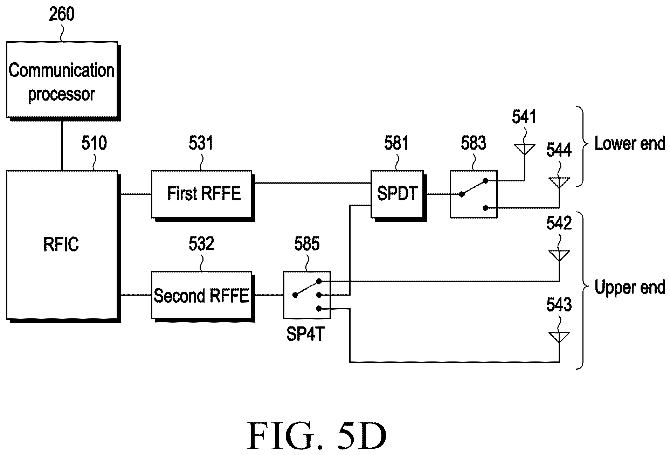

Hereinafter, with reference to FIGS. 5A, 5B, 5C, and 5D, embodiments in which the electronic device 101 has various RF paths of a transmission signal will be described. In the drawings of embodiments described below, it is illustrated that one communication processor 260 and one RFIC 510 are connected to a plurality of RFFEs 531 and 532, various embodiments described below are not limited thereto. For example, in various embodiments provided below, the plurality of communication processors 212 and 214 and/or a plurality of RFICs 222, 224, 226, and 228 may be respectively connected to the plurality of RFFEs 531 and 532, as illustrated in FIG. 2A or FIG. 2B.

FIGS. 5A and 5B are block diagrams of an electronic device according to various embodiments.

Referring to FIG. 5A, an electronic device (e.g., the electronic device 101 of FIG. 1) according to various embodiments may include the processor 120, the communication processor 260, the RFIC 510, the first RFFE 531, the second RFFE 532, a first antenna 541, a second antenna 542, a third antenna 543, a fourth antenna 544, a first switch 551, or a second switch 552. For example, the first RFFE 531 may be disposed in an upper portion of a housing of the electronic device 101, and the second RFFE 532 may be disposed in a lower portion than the first RFFE 531 in the housing of the electronic device 101, but various embodiments of the disclosure are not limited to the disposition.

According to various embodiments, in the case of transmission, the RFIC 510 may convert a baseband signal generated by the communication processor 260 into a radio frequency (RF) signal used for a first communication network or second communication network. For example, the RFIC 510 may transmit an RF signal used for the first communication network to the first antenna 541 or the fourth antenna 544 via the first RFFE 531 and the first switch 551. The RFIC 510 may transmit an RF signal used for the first communication network or the second communication network to the second antenna 542 or the third antenna 543 via the second RFFE 532 and the second switch 552. According to various embodiments, the RFIC 510 may transmit an RF signal corresponding to the first communication network (e.g., NR) to the first antenna 541 or the fourth antenna 544 via the first RFFE 531, and may transmit an RF signal corresponding to the second communication network (e.g., LTE) to the second antenna 542 or the third antenna 543 via the second RFFE 532. According to another embodiment, the RFIC 510 may transmit an RF signal corresponding to the first communication network (e.g., NR) or the second communication network (e.g., LTE) to the first antenna 541 or the fourth antenna 544 via the first RFFE 531, and may transmit the same RF signal corresponding to the first communication network (e.g., NR) or the second communication network (e.g., LTE) to the second antenna 542 or the third antenna 543 via the second RFFE 532, thereby operating as a multi-input multi-output (MIMO) antenna.

According to various embodiments, a transmission path to the first antenna 541 from the RFIC 510 via the first RFFE 531 and the first switch 551 may be referred to as "first antenna transmission path (Ant Tx 1)" or "first RF path". A transmission path to the fourth antenna 544 from the RFIC 510 via the first RFFE 531 and the first switch 551 may be referred to as "fourth antenna transmission path (Ant Tx 4)" or "fourth RF path".

According to various embodiments, in the case of transmission, the RFIC 510 may convert a baseband signal generated by the communication processor 260 into a radio frequency (RF) signal used for the first communication network or second communication network. For example, the RFIC 510 may transmit an RF signal used for the first communication network or the second communication network to the second antenna 542 or the third antenna 543 via the second RFFE 532 and the second switch 552.

According to various embodiments, a transmission path to the second antenna 542 from the RFIC 510 via the second RFFE 532 and the second switch 552 may be referred to as "second antenna transmission path (Ant Tx 2)" or "second RF path". A transmission path to the third antenna 543 from the RFIC 510 via the second RFFE 532 and the second switch 552 may be referred to as "third antenna transmission path (Ant Tx 3)" or "third RF path".

According to various embodiments, in the case of reception, an RF signal is received from the first communication network via the first antenna 541 or the fourth antenna 544, and the received RF signal may be transmitted to the communication processor 260 via at least one RFIC. In addition, an RF signal is received from the first communication network or the second communication network via the second antenna 542 or the third antenna 543, and the received RF signal may be transmitted to the communication processor 260 via at least one RFIC.

According to various embodiments, the first communication network and the second communication network may be different communication networks. For example, the first communication network may be a 5G network, and the second communication network may be a legacy network (e.g., LTE network). In the case in which the first communication network is 5G network, the first RFFE 531 may be designed to be appropriate for processing a signal corresponding to the 5G network, and the second RFFE 532 may be designed to be appropriate for processing a signal corresponding to a legacy network. According to various embodiments, a frequency band of a signal transmitted via the first RFFE 531 may be the same as, or different from, a frequency band of a signal transmitted via the second RFFE 532.

Referring to FIG. 5B, an electronic device (e.g., the electronic device 101 of FIG. 1) according to various embodiments may include the processor 120, the communication processor 260, the RFIC 510, the first RFFE 531, the second RFFE 532, the first antenna 541, the second antenna 542, the third antenna 543, the fourth antenna 544, the first switch 551, or the second switch 552. For example, the first RFFE 531 may be disposed in an upper portion of a housing of the electronic device 101, and the second RFFE 532 may be disposed in a lower portion than the first RFFE 531 in the housing of the electronic device 101, but various embodiments of the disclosure are not limited to the disposition. In the embodiment of FIG. 5B described below, a description that has been described with reference to the 5A and is applicable in common will be described.

According to various embodiments, in the case of transmission, the RFIC 510 may convert a baseband signal generated by the communication processor 260 into a radio frequency (RF) signal used for the first communication network or second communication network. For example, the RFIC 510 may transmit an RF signal used for the first communication network to the first antenna 541 or the fourth antenna 544 via the first RFFE 531 and the first switch 551. In addition, the RFIC 510 may transmit an RF signal used for the first communication network to the second antenna 542 or the third antenna 543 via the first RFFE 531, the first switch 551, and the second switch 552.

According to various embodiments, the RFIC 510 may transmit an RF signal corresponding to the first communication network (e.g., NR) to the first antenna 541 or the fourth antenna 544 via the first RFFE 531, and may transmit an RF signal corresponding to the second communication network (e.g., LTE) to the second antenna 542 or the third antenna 543 via the second RFFE 532. According to various embodiments, the RFIC 510 may transmit an RF signal corresponding to the first communication network (e.g., NR) or the second communication network (e.g., LTE) to the first antenna 541 or the fourth antenna 544 via the first RFFE 531 and the first switch 551, and may transmit the same to the second antenna 542 or the third antenna 543 via the first RFFE 531, the first switch 551, and the second switch 552, thereby operating as a multi-input multi-output (MIMO) antenna. According to various embodiments, a transmission path to the first antenna 541 from the RFIC 510 via the first RFFE 531 and the first switch 551 may be referred to as "first antenna transmission path (Ant Tx 1)" or "first RF path". A transmission path to the fourth antenna 544 from the RFIC 510 via the first RFFE 531 and the first switch 551 may be referred to as "fourth antenna transmission path (Ant Tx 4)" or "fourth RF path". A transmission path to the second antenna 542 from the RFIC 510 via the first RFFE 531, the first switch 551, and the second switch 552 may be referred to as "second antenna transmission path (Ant Tx 2)" or "second RF path". A transmission path to the third antenna 543 from the RFIC 510 via the first RFFE 531, the first switch 551, and the second switch 552 may be referred to as "third antenna transmission path (Ant Tx 3)" or "third RF path".

FIG. 5C is a detailed block diagram illustrating an electronic device according to various embodiments. Referring to FIG. 5C, an electronic device (e.g., the electronic device 101 of FIG. 1) according to various embodiments may include the communication processor 260, the RFIC 510, the first RFFE 531, the first antenna 541, the second RFFE 532, and the second antenna 542.

According to various embodiments, the first RFFE 531 may further include other additional components different from those of the second RFFE 532 in order to perform signal processing appropriate for the 5G network's characteristic or to support a multi-band. For example, the first RFFE 531 may include a front end module (FEM) 560 and a first single pole double throw (SPDT) switch 570.

According to various embodiments, the FEM 560 may include an amplifier (e.g., power amplifier (PA) 561) and a PA envelope tracking IC (PA ET IC) 564. According to various embodiments, the PA ET IC 564 may be included in the FEM 560 as illustrated in FIG. 5C or may be connected to the FEM 560 outside the FEM 560. The PA ET IC 564 may control Vcc (the supply voltage) of the PA 561 according to control performed by the communication processor 260 or RFIC 510. The PA envelope tracking IC (PA ET IC) 564 may operate in multiple modes (e.g., envelope tracking (ET) mode, average power tracking (APT) mode, maximum power mode (e.g., APT full bias or battery direct)) according to control performed by the communication processor 260 or the RFIC 510.

According to an embodiment, in a description provided below, the first RFFE 531 and/or the second RFFE 532 may be referred to as an RF circuit. According to an embodiment, the RF circuit may include an amplifier (e.g., power amplifier (PA)), band pass filters (BPFs), a coupler, a switching circuit (e.g., switch box or antenna switch module (ASM)), or a low noise amplifier (LNA). According to an embodiment, the RF circuit may be referred to as an RFFE, a front end module (FEM), a power amplifier module (PAM), an LNA FEM (LFEM), a power amplifier module with integrated duplexer (PAMiD), an LNA PAMiD (LPAMiD), or a front end module with integrated duplexer (FEMid) depending on a function or component included therein, but is not limited to the term.

According to an embodiment, as illustrated in FIG. 5C, the power amplifier 561 and the switch 570 may be included in a single semiconductor chip or an integrated circuit included in an RF circuit (e.g., first RFFE 531). According to an embodiment, the switch 570 may be configured as a separate module outside an RF circuit. According to an embodiment, the RF circuit may be configured as a semiconductor chip integrated with the RFIC 510 or an integrated circuit, as described above. For example, the amplifier 561 and/or the switch 570 included in the RF circuit may be configured as a semiconductor chip integrated with the RFIC 510 or an integrated circuit, as described above.

FIG. 5D is a block diagram illustrating a plurality of transmission paths of an electronic device according to various embodiments.

According to various embodiments, the communication processor 260 (e.g., at least one of the first communication processor 212, the second communication processor 214, or the integrated communication processor 260) may transmit a baseband signal to at least one of the RFIC 510 (e.g., at least one of the first RFIC 222, the second RFIC 224, the third RFIC 226, or the fourth RFIC 228), and/or may receive a baseband signal. As described above, the RFIC 510 may process, for example, RF signals corresponding to two or more RF paths. Here, the RF path may include, for example, at least one piece of hardware (e.g., at least one of an RFIC, an RFFE, or an antenna) for transmitting an RF signal. For example, the RFIC 510 may receive two or more baseband signals from the communication processor 260, and may generate two or more RF signals respectively corresponding thereto. The two or more RF signals, for example, may have different frequency bands, but it is not limited thereto. At least one operation among generation of two or more RF signals, provision of signals, or inputting signals into an antenna may be performed at least partially overlappingly, and this may be referred to as 2TX. Although the example of FIG. 5D illustrates the RFIC 510 as a single module, this is merely an example, and those skilled in the art may understand that the RFIC 510 is capable of being configured as a plurality of modules for each RF signal. Two or more RF signals may be generated based on, for example, ENDC or MRDC of NEDC, or based on a DSDA mode of a dual-SIM, and the types of a plurality of RF signals are not limited.

According to various embodiments, the RFIC 510 may provide a first RF signal to the first RFFE 531. The RFIC 510 may provide a second RF signal to the second RFFE 532. The first RFFE 531 may process (e.g., amplify) and provide the first RF signal provided. The second RFFE 532 may process (e.g., amplify) and provide the second RF signal provided. For example, the RFFEs 531 and 532 may amplify received RF signals to a degree of amplification determined according to control performed outside (e.g., by the communication processor 260). As described above, based on a determined maximum transmission power limit and/or transmission power, the communication processor 260 may determine a degree of amplification to be performed by the RFFEs 531 and 532. Although not illustrated, based on an average power tracking (APT) module and/or an envelope tracking (ET) module that has been described with reference to FIG. 5C, a degree of amplification to be performed by the RFFEs 531 and 532 may be controlled. According to various embodiments, a single RFFE may process a plurality of RF signals.

According to various embodiments, the first RFFE 531 may be connected to a single pole double throw (SPDT) switch 581, and an output end of the SPDT switch 581 may be connected to a switch 583. The switch 583 may be configured to selectively connect an output end of the SPDT switch 581 to any one of the first antenna 541 or the fourth antenna 544. The second RFFE 532 may be connected to a single pole 4 throw (SP4T) switch 585. The SP4T switch 585 may be configured to selectively connect an output end of the second RFFE 532 to any one of the SPDT switch 585, the second antenna 542, or the third antenna 543. The antennas 541, 542, 543, and 544, for example, may be disposed in the exterior of the housing of the electronic device 101, but it is not limited thereto. In one example, it is assumed that the second antenna 542 or the third antenna 543 is disposed in one side (e.g., in an upper portion) of the housing of the electronic device 101, and the first antenna 541 or the fourth antenna 544 is disposed in the other side (e.g., in a lower portion) of the housing of the electronic device 101. In this instance, a distance between the first antenna 541 and the fourth antenna 544 may be shorter than a distance between the first antenna 541 and the second antenna 542, a distance between the first antenna 541 and the third antenna 543, a distance between the fourth antenna 544 and the second antenna 542, or a distance between the fourth antenna 544 and the third antenna 543. A distance between the second antenna 542 and the third antenna 543 may be shorter than the distance between the first antenna 541 and the second antenna 542, the distance between the first antenna 541 and the third antenna 543, the distance between the fourth antenna 544 and the second antenna 542, or the distance between the fourth antenna 544 and the third antenna 543. Two RF signals may be input to a single antenna at least partially concurrently. For example, an RF signal of the B5 frequency band and an RF signal of the N2 frequency band may be input to the first antenna 541 at least partially concurrently.

For example, when determining whether an SAR limit regulation is violated, whether to determine the same based on a sum of exposures (e.g., SARs and/or PDs) occurring due to a plurality of antennas or determine the same independently from the exposures occurring due to the plurality of antennas, may be determined by Equation 1.

[Equation 1]

$$(SAR_1 + SAR_2)^{1.5}/R \leq 0.04$$

According to various embodiments, in Equation 1, $SAR_1$ is an SAR occurring due to a single antenna, and $SAR_2$ is an SAR occurring due to another antenna and its unit may be, for example, W/kg. R for a sum of various SARs, for example, may be as shown in Table 3 below. The numeral values, 1.5 and 0.04, in Equation 1 are merely an example.

[Table 3]

| Sum of SARs ($SAR_1$+ $SAR_2$) (W/Kg) | Minimum Separation Distance (Minimum Value of R) (mm) |
|---|---|
| 3.2 | 143 |
| 2.8 | 117 |
| 2.4 | 93 |
| 2 | 71 |
| 1.6 | 51 |
| 1.4 | 41 |
| 1.2 | 33 |
| 1.0 | 25 |
| 0.8 | 18 |

For example, it is assumed that a sum of SARs occurring in the second antenna 542 and the third antenna 543 in 2TX is 3.2W/Kg. For example, both the second antenna 542 and the third antenna 543 are disposed in an upper portion of the electronic device 101, and a separate distance therebetween may be less than 143mm. In this instance, to enable the electronic device 101 to determine whether it is an instantaneous SAR regulation violation or a cumulative SAR regulation violation, whether the sum of SARs occurring in the second antenna 542 and the third antenna 543 violates the SAR regulation may need to be determined.

According to various embodiments, it is assumed that a sum of SARs occurring in the second antenna 542 and the first antenna 541 in 2TX is 3.2W/Kg. For example, the second antenna 542 and the first antenna 541 are disposed in an upper portion and a lower portion of the electronic device 101, respectively, and a separate distance therebetween may be greater than or equal to 143mm. In this instance, to enable the electronic device 101 to determine whether it is an instantaneous SAR regulation violation or a cumulative SAR regulation violation, whether a sum of SARs occurring in the second antenna 542 violates the SAR regulation and/or whether a sum of SARs occurring in the first antenna 541 violates the SAR regulation may need to be determined, respectively.

As described above, since Equation 1 is satisfied, in order to determine whether the SAR regulation is violated, the antennas (e.g., a pair of the first antenna 541 and the fourth antenna 544 or a pair of the second antenna 542 and the third antenna 543) taken into consideration for the sum of their SARs may be expressed as being included in the same group. In the case in which a distance between antennas is relatively short (e.g., shorter than a distance related to Equation 1), the antennas may be included in the same antenna group. In addition, since Equation 1 is not satisfied, in order to determine whether the SAR regulation is violated, antennas (e.g., a pair of the first antenna 541 and the second antenna 542, a pair of the first antenna 541 and the third antenna 543, a pair of the fourth antenna 544 and the second antenna 542, or a pair of the fourth antenna 544 and the third antenna 543) taken into consideration for independent SARs, instead of the sum of their SARs, may be expressed as being included in different antenna groups. In the case in which a distance between antennas is relatively long (e.g., longer than a distance related to Equation 1), the antennas may be included in different antenna groups. In the case in which whether to back off a maximum transmittable power (e.g., MTPL) (hereinafter, referred to as an MTPL for ease of description) is determined based on a cumulative SAR (or average SAR), backoff of an MTPL for at least one antenna in the case in which antennas for 2TX are included in the same antenna group may be performed earlier than backoff of an MTPL for at least one antenna in the case in which antennas for 2TX are included in different antenna groups. As described above, a sum of a cumulative SAR and an SAR estimated at a current point in time and/or at a future point in time exceeds a Max cumulative SAR, backoff of the MTPL at the current point in time may be performed. When the antennas are included in the same antenna group, a sum of SARs estimated at the current point in time and/or at the future point in time may be configured as a sum of SARs estimated at the current point in time and/or at the future point in time for one antenna and a sum of SARs estimated at the current point in time and/or at the future point in time for another antenna. Accordingly, when a sum of a cumulative SAR for both antennas, the SAR estimated at the current point in time and/or at the future point in time for one antenna, and the SAR estimated at the current point in time and/or at the future point in time for another antenna exceeds the Max cumulative SAR, backoff of the MTPL at the current point in time may be performed. In the case in which the antennas are included in different antenna groups, backoff of the MTPL at the current point in time may be performed when a sum of a cumulative SAR for one antenna and the SAR estimated at the current point in time and/or at the future point in time for the one antenna exceeds the Max cumulative SAR, or backoff of the MTPL at the current point in time may be performed when a sum of a cumulative SAR for another antenna and the SAR estimated at the current point in time and/or at the future point in time for the other antenna exceeds the Max cumulative SAR. Accordingly, backoff of an MTPL for at least one antenna in the case in which the antennas for 2TX are included in the same antenna group may be performed earlier than backoff of an MTPL for at least one antenna in the case in which the antennas for 2TX are included in different antenna groups. While performing 2TX using antennas in the same antenna group, the electronic device 101 according to various embodiments may change any one RF path during 2TX before performing backoff for any one RF path, and may perform 2TX using antennas of different antenna groups. Accordingly, a point in time for backoff for any one of RF paths may be delayed or backoff may not be performed, and communication may be more stably performed. In one example, the electronic device 101 may transmit a plurality of RF signals using antennas included in the same antenna group at an initial point in time. This may be because that an RF path loss of RF paths corresponding to the antennas in any one antenna group is smaller, but the cause is not limited thereto.

For example, in FIG. 5D, it is assumed that the electronic device 101 transmits a first RF signal of the B5 frequency band and a second RF signal of the N2 frequency band by using the first antenna 541. In this instance, two RF signals are transmitted by a single antenna, and thus, considering that it is 2TX based on the same antenna group, when a sum of a cumulative SAR of the first RF signal, a cumulative SAR of the second RF signal, an SAR estimated at a current point in time and/or at a future point in time for the first RF signal, and an SAR estimated at the current point in time and/or at the future point in time for the second RF signal exceeds the Max cumulative SAR, backoff of the MTPL at the current point in time may be performed. Accordingly, backoff for at least one RF path may be performed relatively earlier. According to various embodiments, the electronic device 101 may change an RF path of the second RF signal before performing backoff for a predetermined RF path. For example, the electronic device 101 may maintain transmitting the first RF signal of the B5 frequency band via the first antenna 541, but may change an RF path so as to transmit the second RF signal of the N2 frequency band via the second antenna 542. Subsequently, for the first RF signal, backoff of an MTPL at a current point in time may be performed when a sum of a cumulative SAR of the first RF signal, a cumulative SAR of the second RF signal, and an SAR estimated at the current point in time and/or at a future point in time for the first RF exceeds the Max cumulative SAR. Accordingly, a point in time for backoff for the first RF signal may be delayed or backoff may not be performed. In addition, for the second antenna 542, since RF signal transmission has not been performed, when a sum of SARs of the second RF signal estimated at the current point in time and/or at the future point in time exceeds the Max cumulative SAR, backoff of an MTPL at the current point in time may be performed. Accordingly, via the second antenna 542, backoff of the MTPL at the current point in time is not performed, and backoff may be performed relatively late in the future or may not be performed. According to various embodiments, when an RF path change is performed by changing a path that is from an RFFE to an antenna, without changing an RFFE (e.g., controlling at least one switch 585 and 585), this may be referred to as antenna switching diversity (ASdiv). Alternatively, when an RF path change is performed by changing an RF circuit (e.g., RFIC and/or RFFE) that processes a corresponding RF signal (or additionally by changing based on control of an antenna), this may be referred to as Tx hopping. In the disclosure, an RF path change may be performed by ASdiv and/or Tx hopping, or other schemes, and those skilled in the art may understand that the types of schemes are not limited.

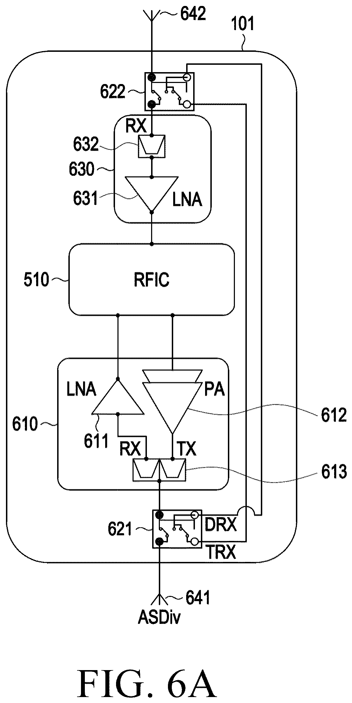

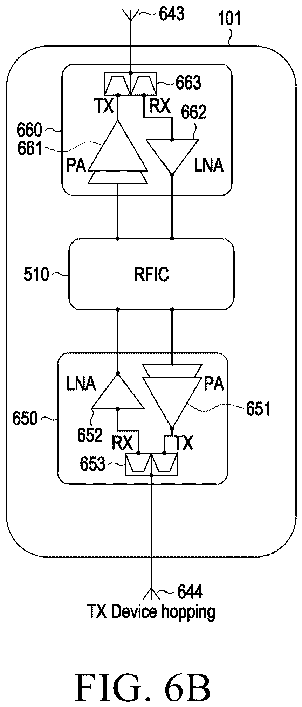

Hereinafter, with reference to FIGS. 6A and 6B, ASdiv and Tx hopping will be described in detail.

FIG. 6A is a block diagram illustrating a plurality of transmission paths of an electronic device according to various embodiments.

Referring to FIG. 6A, according to various embodiments, the electronic device 101 may include the RFIC 510, a first RFFE 610, a first switch 621, a second switch 622, a second RFFE 630, a first antenna 641, and a second antenna 642. The first RFFE 610 may include a first LNA 611, a first PA 612, and a first band filter 613 (e.g., duplexer). The second RFFE 630 may include a second LNA 631 and a second band filter 632. The first switch 621 or the second switch 622 may be embodied as a double pole double throw (DPDT) switch. The first RFFE 610 may be configured to process a low band (LB) frequency signal, but it is not limited thereto.

According to an embodiment, in the case of transmission, the RFIC 510 may transmit a first signal (e.g., first RF signal) used for a first communication network to the first antenna 641 via the first RFFE 610 and the first switch 621. For example, the first RF signal output from the RFIC 510 may be amplified by the PA 612 of the first RFFE 610, and may be transmitted to the first antenna 641 via the first band filter 613 and the first switch 621. A path in which the first RF signal is transmitted to the first antenna 641 via the RFIC 510, the first RFFE 610, and the first switch 621 may be referred to as a first RF path.

According to an embodiment, in the case of transmission, the RFIC 510 may transmit a first signal (e.g., first RF signal) used for the first communication network to the second antenna 642 via the first RFFE 610, the first switch 621, and the second switch 622. For example, the first RF signal output from the RFIC 510 may be amplified by the PA 612 of the first RFFE 610, and may be transmitted to the second antenna 642 via the first band filter 613, the first switch 621, and the second switch 622. A path in which the first RF signal is transmitted to the second antenna 642 via the RFIC 510, the first RFFE 610, the first switch 621, and the second switch 622 may be referred to as a third RF path. According to various embodiments, when compared to the first RF path, as the length of the third RF path is increased due to a DPDT switch (e.g., the first switch 621 or the second switch 622), an additional path loss (e.g., 2dB or 3dB) may occur.

According to an embodiment, when a condition configured for antenna switching (or RF path change) is satisfied while transmitting the first signal via the first RF path, the electronic device 101 may change the RF path of the first signal. For example, when the configured condition is satisfied, the electronic device 101 may change the RF path of the first signal from the first RF path to the third RF path. According to various embodiments, when an RF path change is performed by changing a path that is from an RFFE to an antenna, without changing an RFFE (e.g., controlling the switch 621 or 622) as illustrated in FIG. 6A, this may be referred to as antenna switching diversity (ASdiv) as described above.

According to an embodiment, a condition for changing an RF path may be configured variously. For example, when the condition of Equation 2 given below is satisfied, the electronic device 101 may change an RF path of an RF signal to be transmitted.

$$[Equation\ 2]$$
$$(RSRP_1 - RSRP_0) + (MTPL_{TX1} - MTPL_{TX0}) > Th1$$

Referring to Equation 2, RSRP1 may correspond to a received signal strength in a desired path (e.g., third RF path) and RSRP0 may correspond to a received signal strength in a currently configured path (e.g., first RF path). MTPLTX1 corresponds to a maximum transmittable power in a desired path (e.g., third RF path) and MTPLTX0 corresponds to a maximum transmittable power in a currently configured path (e.g., first RF path). For example, in the case of determining whether to change a path, when a sum of a gain (RSRP1 - RSRP0) of an RSRP and a gain (MTPLTX1 - MTPLTX0) of a transmittable power in association with a path change exceeds a first threshold (Th1) (e.g., 5dB), it is determined to change a path.

According to an embodiment, in the case of reception, a signal received via the first antenna 641 may be transmitted to the RFIC 510 via the first switch 621 and the first RFFE 610. For example, the first RFFE 610 may process the signal received via the first switch 621 by using the first band filter 613 and the first LNA 611, and may transmit the same to the RFIC 510. According to an embodiment, a signal received via the second antenna 642 may be transmitted to the RFIC 510 via the second switch 622 and the second RFFE 630. For example, the second RFFE 630 may process the signal received via the second switch 622 by using the second band filter 632 and the second LNA 631, and may transmit the same to the RFIC 510.

According to an embodiment, in the case of reception, a signal received via the first antenna 641 may be transmitted to the RFIC 510 via the first switch 621, the second switch 622, and the second RFFE 630. For example, the second RFFE 630 may process the signal received via the first antenna 641, the first switch 621, and the second switch 622 by using the second band filter 632 and the second LNA 631, and may transmit the same to the RFIC 510. According to an embodiment, a signal received via the second antenna 642 may be transmitted to the RFIC 510 via the second switch 622, the first switch 621, and the first RFFE 610. For example, the first RFFE 610 may process the signal received via the second antenna 642, the second switch 622, and the first switch 621 by using the first band filter 613 and the first LNA 611, and may transmit the same to the RFIC 510.

FIG. 6B is a block diagram illustrating a plurality of transmission paths of an electronic device according to various embodiments.

Referring to FIG. 6B, according to various embodiments, the electronic device 101 may include the RFIC 510, a third RFFE 650, a fourth RFFE 660, a third antenna 643, and a fourth antenna 644. The third RFFE 650 may include a third PA 651, a third LNA 652, and a third band filter 653 (e.g., duplexer). The fourth RFFE 660 may include a fourth PA 661, a fourth LNA 662, and a fourth band filter 663 (e.g., duplexer). The third RFFE 650 and/or the fourth RFFE 660 may be configured to process a mid/high band (MB/HB) frequency signal, but it is not limited thereto.

According to an embodiment, in the case of transmission, the RFIC 510 may transmit a second signal (e.g., second RF signal) used for a second communication network to the fourth antenna 644 via the third RFFE 650. For example, the second RF signal output from the RFIC 510 may be amplified by the third PA 651 of the third RFFE 650, and may be transmitted to the fourth antenna 644 via the third band filter 653. A path in which the second RF signal is transmitted to the fourth antenna 644 via the RFIC 510 and the third RFFE 650 may be referred to as a second RF path.

According to an embodiment, in the case of transmission, the RFIC 510 may transmit a second signal (e.g., second RF signal) used for the second communication network to the third antenna 643 via the fourth RFFE 660. For example, the second RF signal output from the RFIC 510 may be amplified by the fourth PA 661 of the fourth RFFE 660, and may be transmitted to the third antenna 643 via the fourth band filter 663. A path in which the second RF signal is transmitted to the third antenna 643 via the RFIC 510 and the fourth RFFE 660 may be referred to as a fourth RF path.

According to an embodiment, when a condition configured for antenna switching (or RF path change) is satisfied while transmitting the second signal via the second RF path, the electronic device 101 may change the RF path of the second signal. For example, when the configured condition is satisfied, the electronic device 101 may change the RF path of the second signal from the second PF path to the fourth RF path. According to various embodiments, as illustrated in FIG. 6B, when an RF path change is performed by changing an RF circuit (e.g., RFIC and/or RFFE) that processes a corresponding RF signal (or additionally by changing based on controlling of an antenna), this may be referred to as a Tx hopping (or Tx device hopping).

According to an embodiment, a condition for changing an RF path may be configured variously. For example, when the condition of Equation 2 given below is satisfied, the electronic device 101 may change an RF path of an RF signal to be transmitted. According to an embodiment, for a condition for changing an RF path via antenna switching diversity (ASdiv) illustrated in FIG. 6A and a condition for changing an RF path via Tx hopping illustrated in FIG. 6B, Equation 2 may be equally applied or different conditions for changing may be applied. In addition, according to an embodiment, for the condition for changing an RF path via antenna switching diversity (ASdiv) illustrated in FIG. 6A and the condition for changing an RF path via Tx hopping illustrated in FIG. 6B, although Equation 2 is equally applied, the same threshold (Th1) may be applied or different threshold values may be applied. For example, in the case of the condition for changing an RF path via antenna switching diversity, 5dB may be applied as Th1 in Equation 2. In the case of the condition for changing an RF path via Tx hopping, 3dB may be applied as Th1 in Equation 2.

According to an embodiment, in the case of reception, a signal received via the fourth antenna 644 may be transmitted to the RFIC 510 via the third RFFE 650. For example, the third RFFE 650 may process the signal received via the fourth antenna 644 by using the third band filter 653 and the third LNA 652, and may transmit the same to the RFIC 510. According to an embodiment, a signal received via the third antenna 643 may be transmitted to the RFIC 510 via the fourth RFFE 660. For example, the fourth RFFE 660 may process the signal received via the third antenna 643 by using the fourth band filter 663 and the fourth LNA 662, and may transmit the same to the RFIC 510.

According to various embodiments, although a circuit to which antenna switching diversity of FIG. 6A is applied and a circuit to which Tx hopping of FIG. 6B is applied are illustrated in separate drawings, the single electronic device 101 may include the configurations of FIG. 6A and FIG. 6B. For example, when the electronic device 101 operates in 2TX as described above, a first RF signal is transmitted via a circuit illustrated in FIG. 6A and, concurrently, a second RF signal is transmitted via a circuit illustrated in FIG. 6B. According to various embodiments, technology that provides functions of FIG. 6A and FIG. 6B in one electronic device 101 may be referred to as multiple antenna switching technology, but it is not limited to the term.

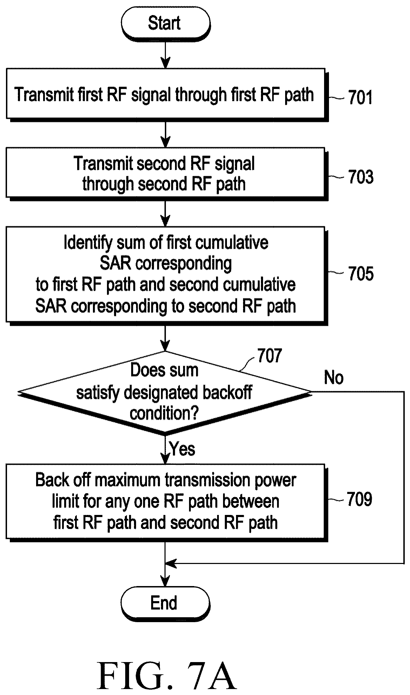

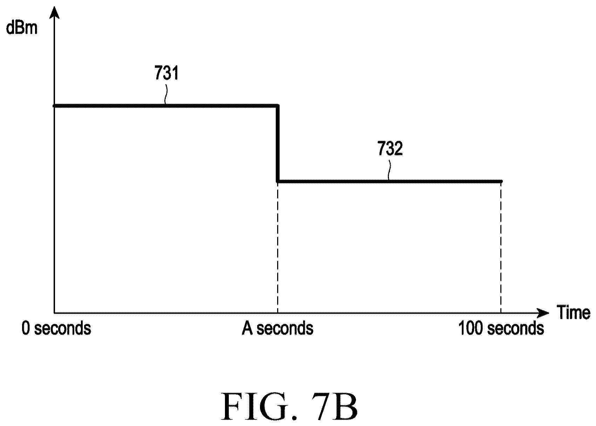

FIG. 7A is a flowchart illustrating an operation method of an electronic device according to various embodiments. The embodiment of FIG. 7A will be described in detail with reference to FIG. 7B.

According to various embodiments, in operation 701, the electronic device 101 may transmit a first RF signal via a first RF path. In operation 703, the electronic device 101 may transmit a second RF signal via a second RF path. In the example of FIG. 7A, although it is illustrated that a first RF path and a second RF path are different from each other, RF signals may be transmitted via the same RF path (or the same antenna). In the example of FIG. 7A, it is assumed that, for example, an antenna corresponding to the first RF path and an antenna corresponding to the second RF path are included in the same antenna group. For example, with reference to FIG. 7B, a maximum transmittable power (e.g., MTPL) (hereinafter, referred to as an MTPL for ease of description) corresponding to the first RF signal may be a first value 731. In operation 705, the electronic device 101 may identify a sum of a first cumulative SAR corresponding to the first RF path and a second cumulative SAR corresponding to the second RF path. In operation 707, the electronic device 101 may identify whether the sum satisfies a designated backoff condition. For example, whether a total sum of the sum of the first cumulative SAR corresponding to the first RF path and the second cumulative SAR corresponding to the second RF path, an SAR estimated at a current point in time and/or at a future point in time for the first RF path, and an SAR estimated at the current point in time and/or at the future point in time for the second RF path, exceeds a Max cumulative SAR may be identified. If the designated backoff condition is satisfied (Yes in operation 707), the electronic device 101 may back off an MTPL for any one RF path between the first RF path and the second RF path in operation 709. For example, the electronic device 101 may determine to change the first RF path to another RF path. In this instance, with reference to FIG. 7B, it is identified that an MTPL corresponding to the first RF signal is backed off from the first value 731 to a second value 732. As the MTPL is decreased, communication stability has the probability of being decreased.

According to various embodiments, as described above, the electronic device 101 may transmit two RF signals, respectively, by using two RF paths, and this may be referred to as 2TX. For example, the electronic device 101 may at least concurrently transmit two RF signals, which are based on multi radio access technology (RAT)-dual connectivity (MR-DC), via two RF paths, respectively. For example, the electronic device 101 may at least concurrently transmit two RF signals, which are based on protocol stacks of dual subscriber identification module (SIM) dual active (DSDA), via two RF paths, respectively. In the case of 2TX, when RF signals are transmitted via physically adjacent antennas, respectively (e.g., when the signals are transmitted via a plurality of antennas included in the same antenna group), a sum of SARs by respective RF signals is calculated as a total SAR, as described above, and thus a cumulative SAR may be relatively promptly increased. In this instance, due to a relatively prompt increase of the cumulative SAR, backoff of one of the transmission power or MTPL in 2TX may be required. In the case of backoff of the transmission power or MTPL, the probability of disconnection of a communication connection may be increased.

According to various embodiment, the TAS algorithm that has been described with reference to FIGS. 3A and 3B decreases a maximum instantaneous transmission power (e.g., MTPL) when an average value (e.g., average SAR) of a total SAR value in a predetermined time window exceeds a predetermined SAR value (e.g., average SAR LIMIT) so that an average transmission power during a predetermined period is adjusted to an allowed average power (e.g., average SAR LIMIT). Therefore, instead of transmitting a signal at a backed-off power in order to satisfy an SAR value, the electronic device 101 may transmit a signal at an instantaneous power level which is higher than that.

According to various embodiments, to satisfy the SAR standard, an SAR limit based on a time-averaged RF exposure may be defined based on each technology (e.g., RAT), a frequency band, an antenna, and/or a device state index (DSI). The SAR limit may be defined by a value of a Plimit, and based on the defined SAR limit, a maximum instantaneous power may be transmitted in compliance with the regulations on the amount of average RF exposure during a predetermined time window. Since the maximum instantaneous power is transmitted in compliance with the regulations on the amount of the time-averaged RF exposure, the performance of the electronic device 101 may be improved.

According to various embodiments, the electronic device 101 that operates based on the TAS may transmit a first signal (e.g., mid/high band signal) by applying Tx hopping technology, and may transmit a second signal (e.g., low band signal) by applying ASDiv technology. Since the electronic device 101 that operates based on the TAS changes an MTPL via SAR control in the case of the same antenna group, when Equation 2 is applied, it may affect an RF path change. For example, it is assumed that the electronic device 101 that operates based on the TAS transmits 2Tx via a plurality of antennas included in the same antenna group by using the same technology (e.g., LTE/NR ULCA) or different technologies (LTE and NR). In this instance, a signal in a frequency band having a relatively lower Plimit may reach a time for operating at a backoff-controlled power, early. Accordingly, when Equation 2 is applied to signals of the 2Tx, it may affect a condition for triggering Tx hopping or ASDiv switching. Therefore, the electronic device 101 may have a problem of not securing the maximum performance for a frequency band that processes a relatively large amount of data.

According to various embodiments, the above-described Plimit may be managed in the form of a table in which power limit values that satisfy the national standard according to a DSI for each frequency band are defined as given in Table 4 below. The Plimit may be stored in memory (e.g., the memory 130 of FIG. 1) of the electronic device 101.

[Table 4]

| DSI | | 0 | | 1 | | 2 | | 3 | | 0 | |
|---|---|---|---|---|---|---|---|---|---|---|---|
| Category | | Non_Head | | Head | | Non_Head | | Non_Head | | Non_Head | |
| Region Ta | | GEO_TAG_NONE | | GEO_TAG_NONE | | GEO_TAG_NONE | | GEO_TAG_NONE | | GEO_TAG_1 | |
| Tech_Band | Antenna | 2G/3G/4G/5G FR1 backoff for (force peak) | Tx power at Design Target (d8m) | 2G/3G/4GI5G FR1 backoff for (force peak) | Tx power at Design Target | 2G/3G/4 G/5G FR1 backoff for (force peak) | Tx power at Design Target (dBm) | 2G/3G/4 G/5G FR1 backoff for Wifi/BI (force peak) | Tx power at Design Target (dBm) | 2G/3G/4 G/5G FR1 backoff for Wifi/BI (force peak) | Tx power at Design Target (dBm) |
| LTE_B1 | 0 | | 20 | | 27 | | 20 | | 27 | | 27 |
| LTE_B1 | 7 | | 22 | | 22 | | 22 | | 22 | | 0 |
| LTE_812 | 0 | | 27.3 | | 28.3 | | 27.3 | | 28.3 | | 27 |
| LTE_812 | 6 | | 26.4 | | 21.5 | | 26.4 | | 21.5 | | 0 |
| LTE_B13 | 0 | | 27.2 | | 27.5 | | 18 | | 18 | | 27 |
| LTE_B13 | 6 | | 28.6 | | 23.2 | | | | | | 0 |
| LTE_B14 | 0 | | 27.1 | | 272 | | 27.1 | | 27.2 | | 27 |
| LTE_814 | 6 | | 29.1 | | 23.2 | | 29.1 | | 23.2 | | 0 |
| LTE_818 | 0 | | 27 | | 27 | | 27 | | 27 | | 27 |
| LTE_818 | 6 | | 27 | | 27 | | 27 | | 27 | | 0 |
| LTE_819 | 0 | | 27 | | 27 | | 27 | | 27 | | 27 |
| LTE_819 | 6 | | 27 | | 27 | | 27 | | 27 | | 0 |
| LTE_82 | 0 | | 19 | | 29.2 | | 19 | | 29.2 | | 27 |
| LTE_82 | 7 | | 21 | | 19 | | 21 | | 19 | | 0 |

According to various embodiments, in Table 4, regarding the DSI, "0" denotes a case in which an SAR-related event does not exist, "1" denotes a state in which an earphone is connected, "2" denotes a state in which a Wi-Fi hotspot is connected, and "3" denotes a state in which a grip sensor detects a grip event. For example, as illustrated in Table 4, a Plimit value may be configured based on a DSC, a frequency band, and an antenna.

According to various embodiments, it is assumed that, when operating in non-standalone (NSA), the electronic device 101 transmits a signal in 2Tx via antennas corresponding to the same antenna group in a B5-n2 combination. It is assumed that a B5 frequency band signal is not transmitted based on a split bearer of a packet data convergence protocol (PDCP) but, as an anchor, is in charge of transmitting a control signal, and an n2 frequency band signal transmits or receives data via a channel (e.g., physical uplink shared channel (PUSCH) or physical downlink shared channel (PDSCH) for user data transmission or reception. Since antennas corresponding to default transmission paths of the B5 and n2 are included in the same antenna group and concurrently transmit Tx from the same antenna group, when an SAR margin is decreased to be lower than a predetermined value (e.g., 50%), a power level (e.g., maximum transmittable power) of a transmission signal corresponding to a frequency band having a low Plimit may be preferentially backed off. Accordingly, in the example, since the Plimit in the n2 frequency band is lower than the Plimit in the B5 frequency band, a reserved margin (e.g., 3dB) is applied to a transmission power of the n2 frequency band and may be backed off to a power level of 16dBm. The electronic device 101 may transmit a signal of the n2 frequency band based on the backed-off power level. According to an embodiment, even in a situation in which an Rx imbalance between a signal (Rx0) received via the first RF path and a signal (Rx1) received via the second RF path does not exist, a triggering threshold (e.g., first threshold (Th1) (e.g., 5dB) of Equation 2) of a Tx hopping algorithm of the n2 frequency band is applied in the electronic device 101, and thus an RF path of a signal of the n2 frequency band may be hopped or switched to another antenna group. In addition, a signal of the B5 frequency band may also be controlled to a backoff power since a Plimit is applied according to a DSI over time.

According to various embodiments, during re-configuration of an RFIC and an RF path of a transmission signal, performed for a Tx hopping or ASDiv algorithm operation, if the electronic device 101 performs data transmission or reception, a Tx/Rx blanking time may occur and a situation that does not allow data transmission or reception may occur. This may cause a user to experience a data communication disabled state, which is a drawback.

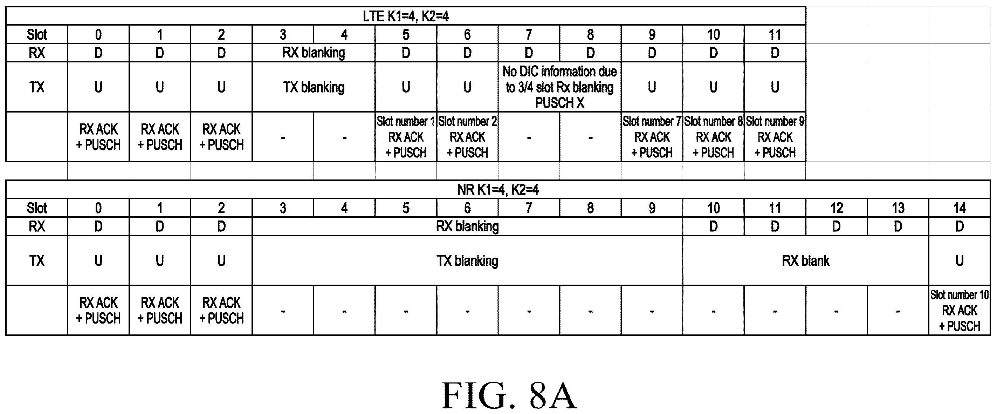

FIG. 8A is a diagram illustrating a signal transmitted or received by an electronic device according to various embodiments.

Referring to FIG. 8A, as described above, a blanking time may occur, in which data is not transmitted or received while an RF path of a transmission signal is reconfigured for a Tx hopping or ASDiv algorithm operation. For example, in the case of an LTE signal, it is identified that a Tx blanking and an Rx blanking occur in a slot number 3 and a slot number 4. In addition, due to the Rx blanking in the slot number 3 and slot number 4, downlink control indicator (DCI) information of a slot number 7 and a slot number 8 may not be identified, and an uplink signal (e.g., PUSCH) may not be transmitted. In the case of an NR signal, it is identified that a Tx blanking and an Rx blanking occur in the slot number 3 to a slot number 9. In addition, due to the Rx blanking, an uplink signal may not be transmitted in a slot number 10 to a slot number 13.

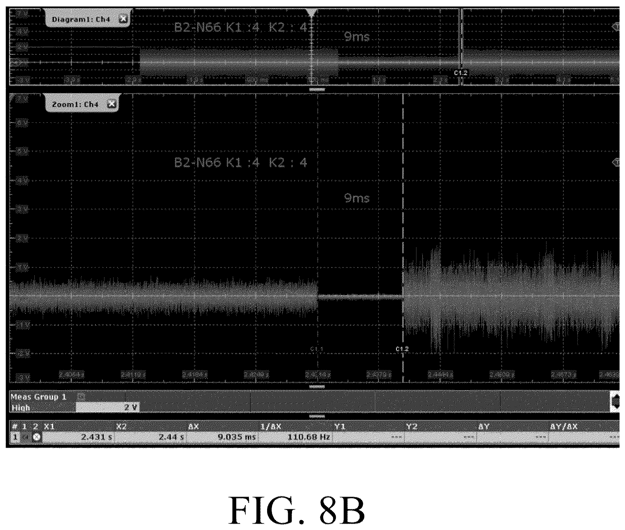

FIG. 8B is a diagram illustrating a signal transmitted or received by an electronic device according to various embodiments. Referring to FIG. 8B, a blanking interval, in which a signal is not transmitted or received due to a Tx hopping operation as described with reference to FIG. 8A, is identified as occurring during approximately 9ms. The blanking interval may cause a user to experience a data communication disabled state, which is a drawback.

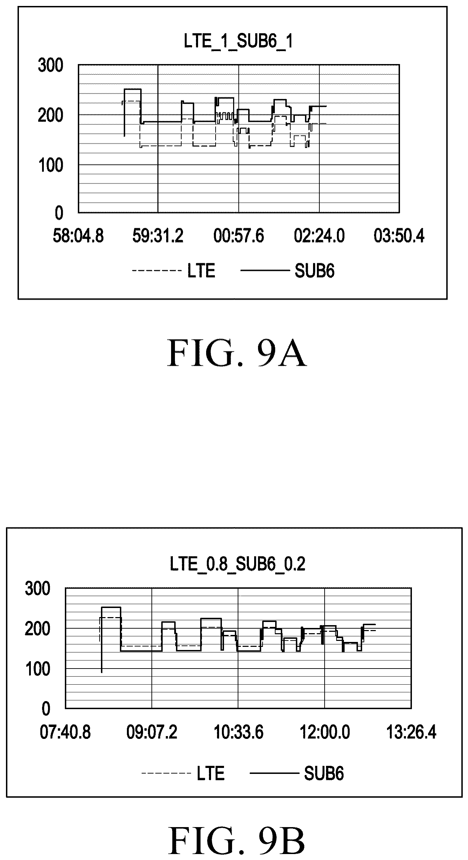

FIG. 9A and FIG. 9B are graphs illustrating a change in power of an EN-DC signal according to various embodiments. Referring to FIGS. 9A and FIG. 9B, when 2Tx is transmitted concurrently in the same antenna group, a Tx power is controlled to be relatively low due to a change of an SAR margin, which results in a deterioration in the performance of an electronic device. For example, not only in a case in which an SAR margin of LTE and an SAR margin of NR SUB6 are configured to 1:1 as illustrated in FIG. 9A, but also in a case in which an SAR margin of LTE and an SAR margin of NR SUB6 are configured to 0.8:0.2 (or 4:1) as illustrated in FIG. 9B, it is identified that a Tx power is controlled to be relatively low due to SAR backoff during a predetermined time interval, resulting in a deterioration in performance.

In various embodiments described below, when SAR backoff is expected for the same antenna group as described above, a Tx power may be prevented from being controlled to be relatively low by adaptively applying a change of an RF path of a transmission signal according to a Tx hopping or ASDiv algorithm. For example, in various embodiments described below, when SAR backoff for the same antenna group is expected, a deterioration in the performance of an electronic device may be prevented by adaptively adjusting a triggering threshold (e.g., first threshold (ThI)(e.g., 5dB) of Equation 2) of the Tx hopping or ASDiv algorithm.

For example, in various embodiments described below, in a situation in which the electronic device 101 that operates based on TAS transmits 2Tx via the same antenna group based on the same technology or different technologies, by configuring a Tx default path in consideration of a network situation or an antenna performance characteristic of the electronic device 101 or by adaptively adjusting a triggering threshold of a Tx hopping or ASDiv algorithm, an optimal RF performance may be maintained. According to various embodiments described below, a maximum transmission power may be maintained by changing a triggering threshold of a Tx hopping or ASDiv algorithm or changing an antenna group based on variable conditions corresponding thereto, before an SAR margin becomes less than or equal to a predetermined value (e.g., 50%) and backoff is performed.

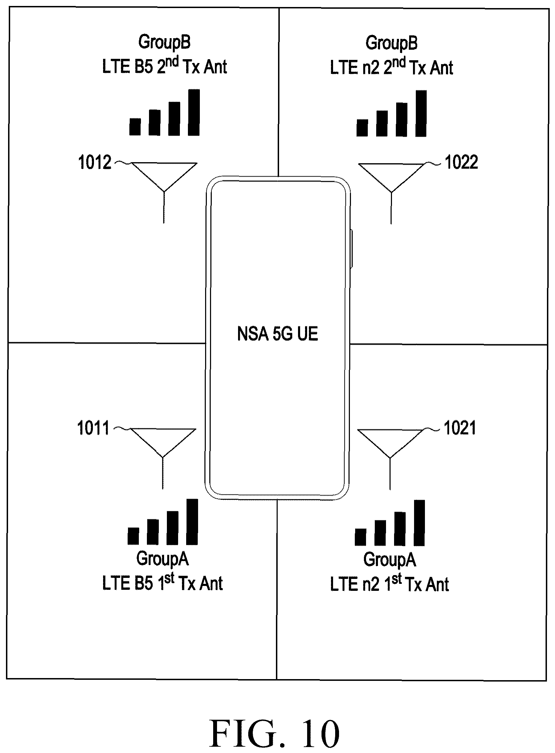

FIG. 10 is a diagram illustrating an antenna arrangement of an electronic device according to various embodiments.

Referring to FIG. 10, according to various embodiments, a first antenna 1011 and a second antenna 1021 disposed in a lower portion of the electronic device 101 may be configured as group A which is the same antenna group. A third antenna 1012 and a fourth antenna 1022 disposed in an upper portion of the electronic device 101 may be configured as a group B which is the same antenna group. For example, as described with reference to FIG. 5D, since Equation 1 is satisfied, in order to determine whether an SAR regulation is violated, antennas taken into consideration for the sum of their SARs may be configured as being included in the same antenna group. In the case in which a distance between antennas is relatively short (e.g., shorter than a distance related to Equation 1), the antennas may be included in the same antenna group.

Referring to FIG. 10, a first distance between the first antenna 1011 and the second antenna 1021 disposed in a lower portion of the electronic device 101 is less than a first threshold distance, and they may be configured as the same antenna group (e.g., group A). A second distance between the third antenna 1012 and the fourth antenna 1022 disposed in an upper portion of the electronic device 101 is less than the first threshold distance, and they may be configured as the same antenna group (e.g., group B). Conversely, a third distance between the first antenna 1011 disposed in a lower portion of the electronic device 101 and the third antenna 1012 disposed in an upper portion is greater than or equal to a second threshold distance, and they may be configured as different antenna groups. A fourth distance between the first antenna 1011 disposed in a lower portion of the electronic device 101 and the fourth antenna 1022 disposed in an upper portion is greater than or equal to the second threshold distance, and they may be configured as different antenna groups. A fifth distance between the second antenna 1021 disposed in a lower portion of the electronic device 101 and the third antenna 1012 disposed in an upper portion is greater than or equal to the second threshold distance, and they may be configured as different antenna groups. A sixth distance between the second antenna 1021 disposed in a lower portion of the electronic device 101 and the fourth antenna 1022 disposed in an upper portion is greater than or equal to the second threshold distance, and they may be configured as different antenna groups. The second threshold distance may be equal to the first threshold distance. The second threshold distance may be greater than the first threshold distance. As described above, for transmission signals configured for the same antenna group, a sum of SARs may be taken into consideration to determine whether an SAR regulation is violated.

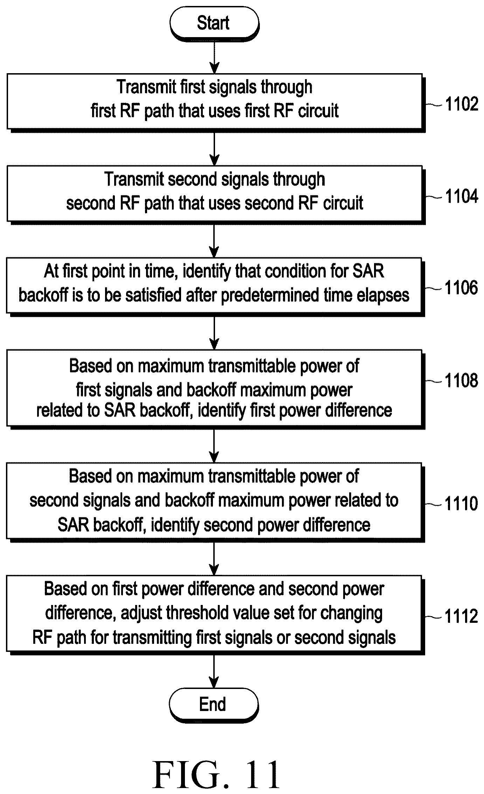

FIG. 11 is a flowchart illustrating an operation method of an electronic device according to various embodiments.

In the embodiment provided hereinafter, operations may be performed sequentially, but the order is not necessarily sequential. For example, the order of operations may be changed, and at least two operations may be performed in parallel.

According to various embodiments, the electronic device 101 (e.g., at least one of the processor 120, the first communication processor 212, the second communication processor 214, or the integrated communication processor 260) may perform control so that first signals are transmitted through a first RF path that uses a first RF circuit in operation 1102. To the first RF path that uses the first RF circuit, a Tx hopping algorithm, described with reference to FIG. 6B, may be applicable, but it is not limited thereto.

According to various embodiments, in operation 1104, the electronic device 101 may perform control so that the first signals are transmitted through the first RF circuit and, concurrently, second signals are transmitted through a second RF path that uses a second RF circuit. To the second RF path that uses the second RF circuit, an ASDiv algorithm, described with reference to FIG. 6A, may be applicable, but it is not limited thereto.

According to various embodiments, in operation 1106, at a first point in time, the electronic device 101 may identify that a condition for SAR backoff is to be satisfied after a predetermined time elapses. For example, the electronic device 101 may maintain an SAR management module (SAR manager) that monitors an SAR value, in an enabled state. The SAR management module may be aware of the amount of SAR consumption associated with power transmitted to date, and may determine an operation for estimating (estimation) an SAR margin to be used in the future. According to various embodiments, the SAR management module may periodically perform measurement of a current transmission power, and may calculate an SAR value, as shown in Table 5.

[Table 5]

| Assuming the SAR Target 100mW/g,<br>Max Power level : 23dBm, SAR consumption : 1mW/g per 0.5 seconds<br>Backoff Power level : 20dBm, SAR consumption : 0.5mW/g per 0.5 seconds | | | | |
|---|---|---|---|---|
| SAR Manager | Time | Power level | SAR total usage | Remaining SAR margin rate compared to Limit |
| previous measurement | 08:00:00:000 | 23dBm | 0.0% | 100% |
| | 08:00:00:500 | 23dBm | 0.5% | 99.5% |
| | 08:00:01:000 | 23dBm | 1.0% | 99.0% |
| | 08:00:01:500 | 23dBm | 1.5% | 98.5% |
| ... | ... | ... | ... | ... |
| current measurement | XX.XX.XX.XXX | 23dBm | 48.5 % | 51.5% |
| Est. measurement | XX.XX.XX.XXX+50 0ms | 23dBm(Worst prediction) | 49.0 % | 51.0% |
| Est. 2nd measurement | XX.XX.XX.XXX+1.000s | 20dBm(Worst prediction) | 49.5 % | 50.75% |

Referring to Table 5, a period for calculating the SAR value is configured to 500ms, and an SAR value may be measured by periods. The period for calculating the SAR value may be configured to be different for each operator or manufacturer, and it is not limited to the illustrated value. According to an embodiment, when a transmission signal is transmitted at a maximum power (max power level) at a predetermined measurement point in time, and a transmission signal is transmitted at the maximum power at a subsequent measurement period, the electronic device 101 (e.g., SAR management module) may identify a moment at which a ratio of the remaining SAR margin to a total SAR limit is decreased to be lower than or equal to a predetermined ratio (e.g., 51%). For example, the electronic device 101 may identify the point in time at which the remaining SAR margin ratio becomes less than or equal to the predetermined ratio is the first point in time. For example, when the remaining SAR margin ratio is less than or equal to 50%, SAR backoff may operate. To perform embodiments described below before SAR backoff operates, the embodiments need to be performed at a point in time at which the remaining SAR margin ratio is less than or equal to 51%, before reaching 50%. Referring to Table 5, a measurement value currently measured by the SAR management module is 51.5%, and an estimated value at a subsequent measurement point is 51%, and thus the electronic device 101 may operate an algorithm described below at the current measurement point at which a condition for SAR backoff is identified to be satisfied after a predetermined period of time elapses. According to various embodiments, a point in time at which the embodiments described below are to be performed may be changed when a connection means such as WLAN/BT or the like is added.

According to various embodiments, in operation 1108, the electronic device 101 may identify a first power difference between a maximum transmittable power (hereinafter, referred to as Pmax) (e.g., MTPL) of the first signals and a backoff maximum power (hereinafter, Pcurrent max) related to SAR backoff of the first signals. The power difference (hereinafter, Tx chain power delta) may be expressed as give in Equation 3.

$$[\text{Equation 3}]$$
$$Tx\ Chain\ Power\ Delta = Pmax - Pcurrent\ max$$

According to various embodiment, in Equation 3, Pmax may be configured to a maximum transmittable power that is transmittable when the electronic device 101 has a sufficient SAR margin, but it is not limited thereto. For example, a maximum transmittable power for each transmission path may be configured in consideration of at least one of a maximum transmittable power (P-MAX power) (PeMax) received from each communication network (e.g., base station) and a maximum transmittable power (UE Tx MAX Power; PcMax) for each transmission path configured by the electronic device 101. For example, the maximum transmittable power may be determined to be the minimum value among the plurality of maximum transmittable powers (e.g., P-MAX Power, UE Tx MAX Power) mentioned above, but it is not limited thereto.

According to various embodiments, in Equation 3, a backoff maximum power (Pcurrent max) may be configured to a power to which a Tx power is to be backed off in order to secure an SAR margin since an SAR margin is insufficient, but it is not limited thereto. For example, the backoff maximum power (Pcurrent max) may be configured to a power obtained by decreasing a reserved power ($P_{reserve}$) (e.g., 3dB) from a Plimit.

According to various embodiments, in operation 1110, the electronic device 101 may identify a second power difference based on a maximum transmittable power of the second signals and a backoff maximum power related to SAR backoff of the second signals.

According to various embodiments, in operation 1112, based on the first power difference and the second power difference, the electronic device 101 may adjust a threshold (e.g., first threshold (Th1) of Equation 2) set for changing the first RF path for transmitting the first signals and the second RF path for transmitting the second signals to a third RF path associated with a third antenna among the plurality of antennas. For example, in operation 1112, when a configured condition is satisfied, the electronic device 101 may adjust the threshold from 5dB to 3dB.

According to various embodiments, based on identifying that the first power difference is greater than the second power difference, the electronic device 101 may adjust the threshold (e.g., first threshold (Th1)) set for changing, to the third RF path, the first RF path for transmitting the first signals. According to various embodiments, based on identifying that the first power difference is greater than a first set value (e.g., 5dB), the electronic device 101 may adjust the threshold (e.g., first threshold (Th1)) set for changing, to the third RF path, the first RF path for transmitting the first signals. According to various embodiments, further based on identifying that a difference between a strength (e.g., RSRP) of a signal received through the third RF path and a strength of a signal received through the first RF path is less than a second set value (e.g., 5dB), the electronic device 101 may adjust the threshold (e.g., first threshold (Th1)) set for changing, to the third RF path, the first RF path for transmitting the first signals.

Hereinafter, to help understanding, an example of actually operating the electronic device 101 will be described. According to an embodiment, in the case in which a default RF path is configured for the electronic device 101, first signals may support Tx hopping or ASDiv and second signals may support Tx hopping and ASDiv after an RRC connection is established, and thus a condition for operating a multi-antenna switching algorithm may be satisfied. For example, the electronic device 101 may be configured to a combination of accessing a communication network and servicing 2Tx in the same antenna group. The electronic device 101 may transmit a transmission signal to a network based on a maximum transmittable power in the two Tx chains, and may consume an SAR margin. Due to the consumption of the SAR margin, a point in time at which a condition for SAR backoff is satisfied is brought after a predetermined period of time elapses.

According to various embodiments, in the case in which the algorithm of FIG. 11 is not applied, when a point in time for performing SAR backoff by the electronic device 101 and controlling a transmission power to be a backed-off power, arrives, it is determined that an SAR margin is insufficient to satisfy an SAR-related configured regulation, and a transmission power may be backed off. In this instance, an antenna switching method (e.g., Tx hopping or ASDiv) applied to each Tx chain may identify whether the condition of Equation 2 is satisfied as described above, and may operate independently from the SAR backoff operation. For example, it is assumed that a Tx hopping technology is applied to an LTE B2 signal, and an ASDiv technology is applied to an NR n5 signal. For an LTE B2 Tx/PRx path, it is determined to perform a hopping operation since calculation is performed as shown in Equation 4 below, according to Equation 2.

$$[\text{Equation 4}]$$
$$(-93dBm-(-100dBm))+(23dBm-23dBm)>5dB$$

Referring to Equation 4, a result obtained from the left-hand side is 7dB which satisfies a condition of being higher than a threshold of 5dB, and thus a hopping operation may be performed.

Hereinafter, a description will be provided in comparison with an operation in the case in which the algorithm of FIG. 11 is applied. As described above, in the case in which the algorithm of FIG. 11 is applied, the electronic device 101 may identify a first power difference (power delta) of first signals and a second power difference of second signals, and adaptively change a triggering threshold (e.g., first threshold) of a transmission signal having a higher power difference before SAR backoff starts, so as to perform movement to another antenna group. Therefore, a time in which transmission is performed at a maximum transmittable power may be increased without SAR backoff of the first signals or second signals. For example, in the case in which the algorithm of FIG. 11 is not applied, when a first threshold of a Tx hopping technology and ASDiv technology is configured to a default set value of 5dB and the default set value of 5dB is not satisfied although a power difference is greater than or equal to 5dB, an RF path is not changed and an SAR backoff operation may be performed. In the case in which the algorithm of FIG. 11 is applied, when a power difference is greater than or equal to 5dB, the first threshold value may be changed from 5dB to 2dB, and thus an RF path may be changed.

For example, in a 2Tx situation with first signalswhich are signals of the LTE B2 frequency band and second signals which are signals of the NR n5 frequency band, the algorithm of FIG. 11 may be applied as follows.

$$\text{First Tx Chain Pmax} = 25dBm$$

$$\text{First Tx Pcurrent max} = \text{Plimit} - \text{Preserve(3dB)} = 22dBm - 3dB = 19dBm$$

$$\text{First Power Delta} = 25\text{dBm} - 19\text{dBm} = 6\text{dB}$$

$$\text{Second Tx Chain Pmax} = 25\text{dBm}$$

$$\text{Second Tx Pcurrent max} = \text{Plimit} - \text{Preserve}(3\text{dB}) = 28\text{dBm} - 3\text{dB} = 25\text{dBm}$$

$$\text{Second Power Delta} = 25\text{dBm} - 25\text{dBm} = 0$$

In this instance, in the case of a first Tx with Rx0 = -93dBm, Rx1 = -95dBm, when Equation 2 is applied in the state in which the first threshold is not changed, before the algorithm of FIG. 11 is applied, (-95dBm - (-93dBm))+ (25dBm - 19dBm) > Threshold Level= 5 dB is not satisfied and thus, LTE B2 may not perform Tx hopping. As the algorithm of FIG. 11 is applied, since a power difference is greater than or equal to 5dB and a difference in RSRP is within 5dB, a condition for operating the algorithm of FIG. 11 is satisfied, the first threshold is controlled from 5dB to 2dB. Since the first threshold is adjusted to 2dB, when Equation 2 is applied, LTE B2 may be moved to another antenna group. According to another embodiment, in the case in which a first power difference (power delta) of the first signals is greater than a second power difference of the second signals, and the first power difference is greater than the first set value (e.g., 5dB), an RF path of the first signals may be forcibly changed irrespective of whether Equation 2 is satisfied. As described above, the electronic device 101 may change an RF path to an antenna group having a sufficient SAR margin so that a time for transmission at Pmax level is increased and RF performance may be secured.

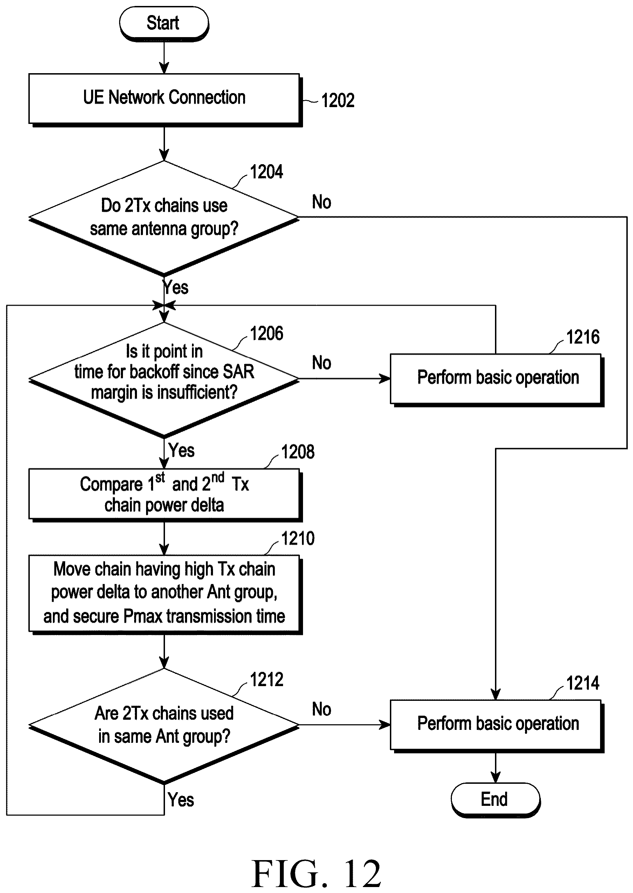

FIG. 12 is a flowchart illustrating an operation method of an electronic device according to various embodiments.

In the embodiment provided hereinafter, operations may be performed sequentially, but the order is not necessarily sequential. For example, the order of operations may be changed, and at least two operations may be performed in parallel.

According to various embodiments, the electronic device 101 (e.g., at least one of the processor 120, the first communication processor 212, the second communication processor 214, or the integrated communication processor 260) may access a network in operation 1202.

According to various embodiments, the electronic device 101 may perform control so that first signals are transmitted through a first RF circuit and, concurrently, second signals are transmitted through a second RF path that uses a second RF circuit. In operation 1204, the electronic device 101 may identify whether RF paths corresponding to the 2Tx signals use the same antenna group.

According to various embodiments, when the identification shows that the same antenna group is not used (No in operation 1204), the electronic device 101 may continuously perform a basic operation in operation 1214. According to various embodiments, when the identification shows that the same antenna group is used (Yes in operation 1204), the electronic device 101 may identify whether it is a point in time at which an SAR margin is insufficient and backoff is expected, in operation 1206. For example, as illustrated in FIG. 11, at a first point in time, it is identified that a condition for SAR backoff is expected to be satisfied after a predetermined period of time elapses. According to various embodiments, when the identification shows that a condition for SAR backoff is not expected to be satisfied after a predetermined period of time elapses (No in operation 1206), the electronic device 101 may continuously perform a basic operation in operation 1216.

According to various embodiments, when the identification shows that a condition for SAR backoff is expected to be satisfied after a predetermined period of time elapses (Yes in operation 1206), the electronic device 101 may compare a first power difference of first signals and a second power difference of second signals in operation 1208.

According to various embodiments, in operation 1210, based on a result of the comparison, the electronic device 101 may move a transmission signal having a higher power difference to another antenna group, and may secure a time for transmitting a transmission signal at Pmax.

According to various embodiments, the electronic device 101 may identify again whether 2Tx is used in the same antenna group in operation 1212. According to various embodiments, when the identification shows that the same antenna group is not used (No in operation 1212), the electronic device 101 may continuously perform a basic operation in operation 1214. According to various embodiments, when the identification shows that the same antenna group is used (Yes in operation 1212), the electronic device 101 may identify again whether it is a point in time at which an SAR margin is insufficient and backoff is expected, in operation 1206.

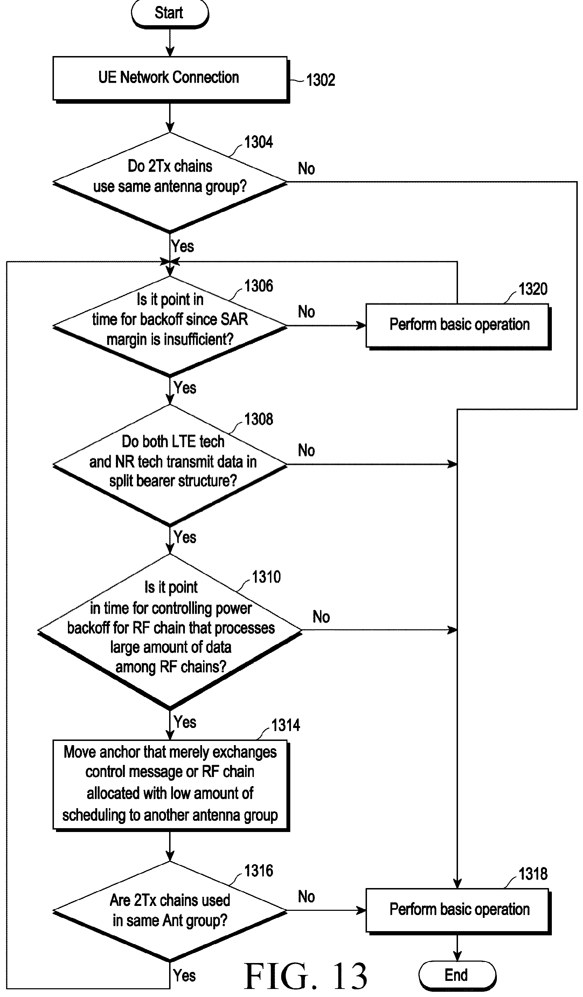

FIG. 13 is a flowchart illustrating an operation method of an electronic device according to various embodiments.

In the embodiment provided hereinafter, operations may be performed sequentially, but the order is not necessarily sequential. For example, the order of operations may be changed, and at least two operations may be performed in parallel.

According to various embodiments, the electronic device 101 (e.g., at least one of the processor 120, the first communication processor 212, the second communication processor 214, or the integrated communication processor 260) may access a network in operation 1302.

According to various embodiments, the electronic device 101 may perform control so that first signals are transmitted through a first RF circuit and, concurrently, second signals are transmitted through a second RF path that uses a second RF circuit. In operation 1304, the electronic device 101 may identify whether RF paths corresponding to the 2Tx signals use the same antenna group.

According to various embodiments, when the identification shows that the same antenna group is not used (No in operation 1304), the electronic device 101 may continuously perform a basic operation in operation 1318. According to various embodiments, when the identification shows that the same antenna group is used (Yes in operation 1304), the electronic device 101 may identify whether it is a point in time at which an SAR margin is insufficient and backoff is expected, in operation 1306. For example, as illustrated in FIG. 11, at a first point in time, it is identified that a condition for SAR backoff is expected to be satisfied after a predetermined period of time elapses. According to various embodiments, when the identification shows that a condition for SAR backoff is not expected to be satisfied after a predetermined period of time elapses (No in operation 1306), the electronic device 101 may continuously perform a basic operation in operation 1320.

According to various embodiments, when the identification shows that a condition for SAR backoff is expected to be satisfied after a predetermined period of time elapses (Yes in operation 1306), the electronic device 101 may identify whether both LTE and NR transmit data in a split bearer structure in operation 1308. According to various embodiments, when the identification shows that both LTE and NR do not transmit data in the split bearer structure (No in operation 1308), the electronic device 101 may continuously perform a basic operation in operation 1318. According to various embodiments, when the identification shows that both LTE and NR transmit data in the split bearer structure (Yes in operation 1308), the electronic device 101 may identify whether it reaches a point in time for controlling, based on SAR backoff, a transmission signal that is allocated with a larger amount of PUSCH data and provides service between the two transmission signals. According to various embodiments, when the identification shows that it does not reach a point in time for controlling, based on SAR backoff, the transmission signal that is allowed with a larger amount of PUSCH data and provides service (No in operation 1310), the electronic device 101 may continuously perform a basic operation in operation 1318. According to various embodiments, when the identification shows that it reaches a point in time for controlling, based on SAR backoff, the transmission signal that is allocated with a larger amount of PUSCH data and provides service (Yes in operation 1310), the electronic device 101 may move, to another antenna group, an RF path of a transmission signal that is allocated with a low ratio of scheduling from a network and processes a small amount of data or an anchor of LTE that does not operate as a split bearer in PDCP but is only in charge of transmitting a control channel message in operation 1314. By moving the same to another antenna group as described above, a T/RX blanking time due to an RF path movement, which has been mentioned as a drawback in FIGS. 8A and 8B, may be minimized. According to various embodiments, the electronic device 101 may identify again whether 2Tx is used in the same antenna group in operation 1316. According to various embodiments, when the identification shows that the same antenna group is not used (No in operation 1316), the electronic device 101 may continuously perform a basic operation in operation 1318. According to various embodiments, when the identification shows that the same antenna group is used (Yes in operation 1316), the electronic device 101 may identify again whether it is a point in time at which an SAR margin is insufficient and backoff is expected in operation 1306.

According to various embodiments, as a method of changing an RF path of a transmission signal, following methods may be used.

- A method may increase a first threshold of an RF path that is allocated with a relatively large amount of data and performs data transmission or reception, so as to continuously maintain transmission in a current antenna group, and may decrease a first threshold of an RF path that is allocated with relatively less scheduling by a network or that is used only an anchor, so as to perform switching to another antenna group. In this manner, RF performance of a frequency band that transmits or receives a large amount of data may be secured.
- A method may increase a priority order associated with an antenna switching algorithm operation for an RF path that is allocated with relatively less scheduling from a network or is used only as an anchor so as to perform switching to another antenna group, so that an RF path that is allocated with relatively more scheduling from the network and performs data transmission or reception continuously maintains a current antenna group. In this manner, RF performance of a frequency band that transmits or receives a large amount of data may be secured.
- A method may temporarily disable an antenna switching algorithm operation used in an RF path so as to continuously use the current RF path, so that the RF path that is allocated with relatively more scheduling from a network and performs data transmission or reception continuously maintain a current antenna group.

According to various embodiments, above described operations may be operated separately, or at least two operations may be applied in parallel. According to various embodiments, in the case of changing an RF path of a transmission signal that is only in charge of a control channel, since the electronic device 101 is capable of identifying a cycle of a control message transmitted from a network, the electronic device 101 may enable the above-described algorithm operation to be performed selectively, when a control channel is not transmitted.

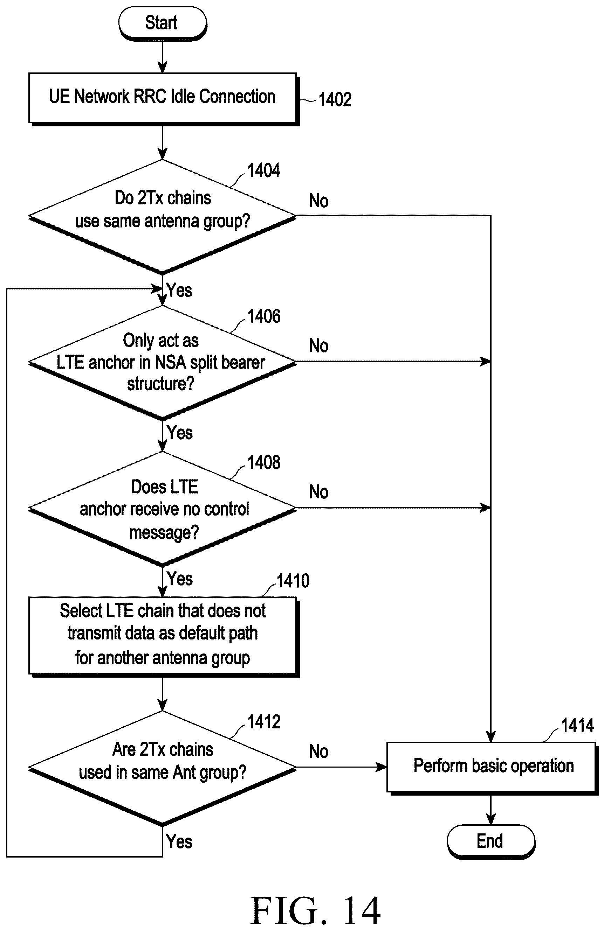

FIG. 14 is a flowchart illustrating an operation method of an electronic device according to various embodiments.

In the embodiment provided hereinafter, operations may be performed sequentially, but the order is not necessarily sequential. For example, the order of operations may be changed, and at least two operations may be performed in parallel.

According to various embodiments, the electronic device 101 (e.g., at least one of the processor 120, the first communication processor 212, the second communication processor 214, or the integrated communication processor 260) may access a network in operation 1402.

According to various embodiments, the electronic device 101 may perform control so that first signals are transmitted through a first RF circuit and, concurrently, second signals are transmitted through a second RF path that uses a second RF circuit. In operation 1404, the electronic device 101 may identify whether RF paths corresponding to the 2Tx signals use the same antenna group.

According to various embodiments, when the identification shows that the same antenna group is not used (No in operation 1404), the electronic device 101 may continuously perform a basic operation in operation 1414. According to various embodiments, when the identification shows that the same antenna group is used (Yes in operation 1404), the electronic device 101 may identify whether the first signals only act as an LTE anchor in an NSA split bearer structure in operation 1406. According to various embodiments, when the identification shows that it is not that the first signals only act as an LTE anchor (No in operation 1406), the electronic device 101 may continuously perform a basic operation in operation 1414.

According to various embodiments, when the identification shows that the first signals only act as an LTE anchor in the NSA split bearer structure (Yes in operation 1406), the electronic device 101 may identify whether the LTE anchor receives no control message in operation 1408. According to various embodiments, when the identification shows that the LTE anchor receives a control message (No in operation 1408), the electronic device 101 may continuously perform a basic operation in operation 1414. According to various embodiments, when the identification shows that the LTE anchor does not receive a control message (Yes in operation 1408), the electronic device 101 may select, for another antenna group, a default path of an RF path corresponding to an LTE transmission signal that does not perform data transmission in operation 1410. According to various embodiments, the electronic device 101 may identify again whether 2Tx is used in the same antenna group in operation 1412. According to various embodiments, when the identification shows that the same antenna group is not used (No in operation 1412), the electronic device 101 may continuously perform a basic operation in operation 1414. According to various embodiments, when the identification shows that the same antenna group is used (Yes in operation 1412), the electronic device 101 may identify again whether the first signals only act as an LTE anchor in an NSA split bearer structure in operation 1406.

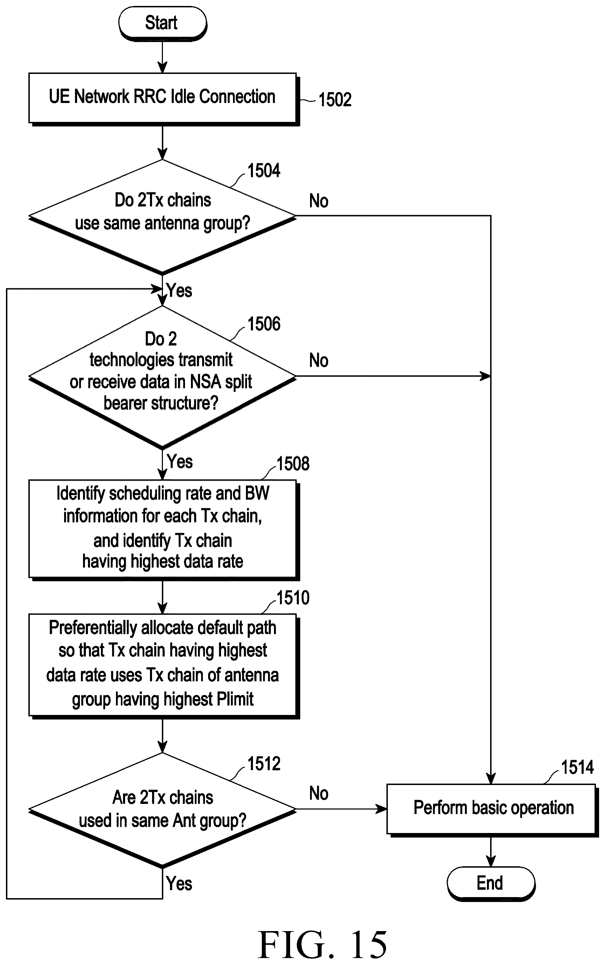

FIG. 15 is a flowchart illustrating an operation method of an electronic device according to various embodiments.

In the embodiment provided hereinafter, operations may be performed sequentially, but the order is not necessarily sequential. For example, the order of operations may be changed, and at least two operations may be performed in parallel.

According to various embodiments, the electronic device 101 (e.g., at least one of the processor 120, the first communication processor 212, the second communication processor 214, or the integrated communication processor 260) may access a network in operation 1502.

According to various embodiments, the electronic device 101 may perform control so that first signals are transmitted through a first RF circuit and, concurrently, second signals are transmitted through a second RF path that uses a second RF circuit. In operation 1504, the electronic device 101 may identify whether RF paths corresponding to the 2Tx signals use the same antenna group.

According to various embodiments, when the identification shows that the same antenna group is not used (No in operation 1504), the electronic device 101 may continuously perform a basic operation in operation 1514. According to various embodiments, when the identification shows that the same antenna group is used (Yes in operation 1504), the electronic device 101 may identify whether both LTE and NR transmit data in an NSA split bearer structure in operation 1506. According to various embodiments, when the identification shows that both LTE and NR do not transmit data in the split bearer structure (No in operation 1506), the electronic device 101 may continuously perform a basic operation in operation 1514. According to various embodiments, when the identification shows that both LTE and NR transmit data in the split bearer structure (Yes in operation 1506), the electronic device 101 may identify a scheduling ratio and frequency bandwidth information for each transmission signal, and may identify a transmission signal having a highest data rate in operation 1508.

According to various embodiments, in operation 1510, the electronic device 101 may preferentially allocate a default path so that a transmission signal having a highest data rate uses an RF path of an antenna group having a highest Plimit. According to various embodiments, in operation 1512, the electronic device 101 may identify again whether 2Tx is used in the same antenna group. According to various embodiments, when the identification shows that the same antenna group is not used (No in operation 1512), the electronic device 101 may continuously perform a basic operation in operation 1514. According to various embodiments, when the identification shows that the same antenna group is used (Yes in operation 1512), the electronic device 101 may identify again whether both LTE and NR transmit data in the NSA split bearer structure in operation 1506, as described above.

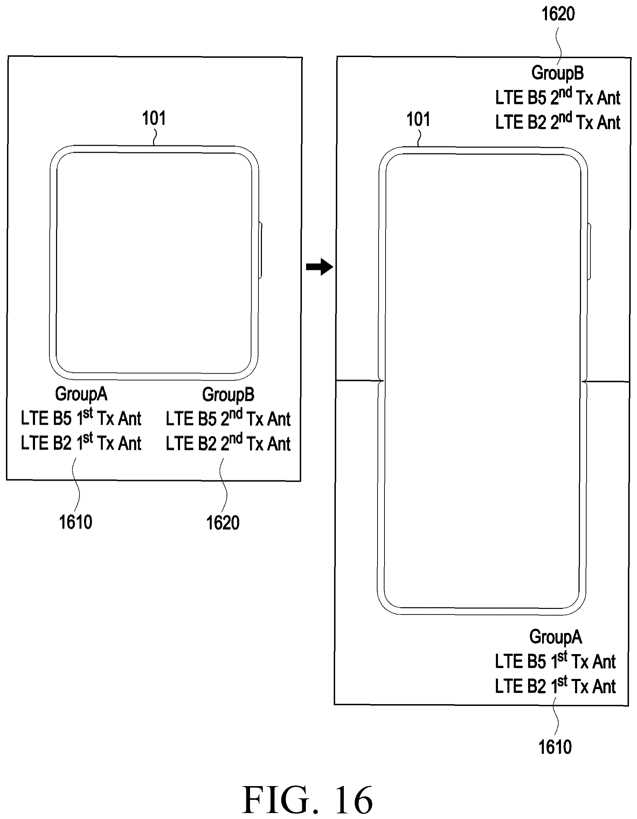

FIG. 16 is a diagram illustrating an antenna arrangement of an electronic device of which the appearance is changeable according to various embodiments.

Referring to FIG. 16, when the electronic device 101 of which the appearance is changeable is in a closed-state as illustrated on the left in the drawing, antennas 1610 corresponding to group A and antennas 1620 corresponding to group B may be processed as the same antenna group since the distance therebetween is less than a first threshold distance. When the appearance of the electronic device 101 is changed to an open-state as illustrated on the right in the drawing, the antennas 1610 corresponding to the group A and the antennas 1620 corresponding to the group B may be processed as different antenna groups since the distance therebetween is greater than or equal to a second threshold distance. The second threshold distance may be equal to the first threshold distance. The second threshold distance may be greater than the first threshold distance.

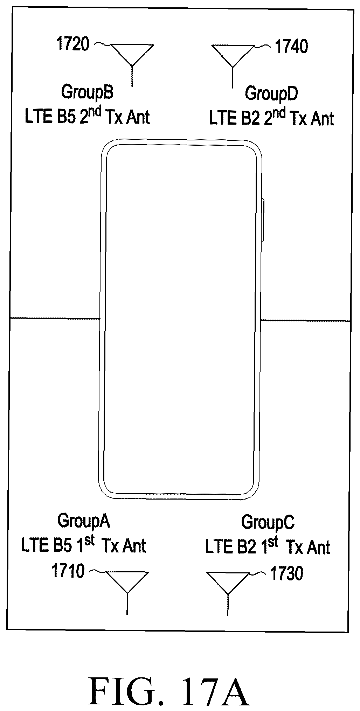

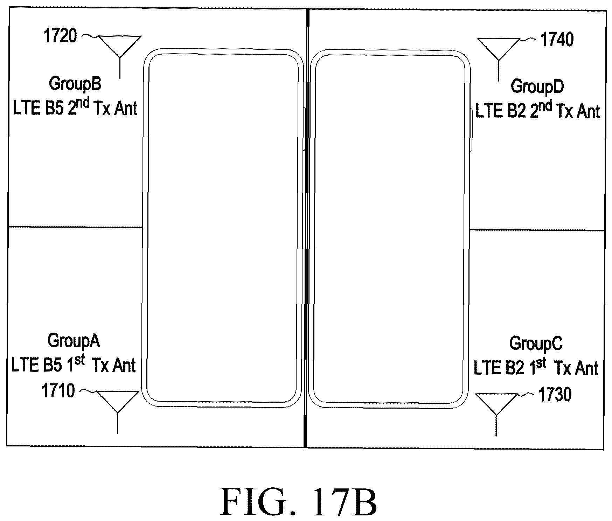

FIGS. 17A and FIG. 17B are diagrams illustrating an antenna arrangement of an electronic device of which the appearance is changeable according to various embodiments.

Referring to FIG. 17A, when the electronic device 101 of which the appearance is changeable is in a closed-state, antennas 1710 corresponding to group A and antennas 1730 corresponding to group C may be processed as the same antenna group since the distance therebetween is less than a first threshold distance. When the appearance of the electronic device 101 is changed to an open-state as illustrated in FIG. 17B, the antennas 1710 corresponding to the group A and the antennas 1730 corresponding to the group C may be processed as different antenna groups since the distance therebetween is greater than or equal to a second threshold distance. In the same manner, referring to FIG. 17A, when the electronic device 101 is in the closed-state, antennas 1720 corresponding to group B and antennas 1740 corresponding to group D may be processed as the same antenna group since the difference therebetween is less than a first threshold distance. When the appearance of the electronic device 101 is changed to an open-state as illustrated in FIG. 17B, the antennas 1720 corresponding to the group B and the antennas 1740 corresponding to the group D may be processed as different antenna groups since the distance therebetween is greater than or equal to a second threshold distance.

As described above, while a plurality of RF signals are transmitted by antennas included in the same antenna group, backoff of a predetermined RF signal is not performed and a plurality of RF signals may be transmitted by antennas included in different antenna groups, and thus stable communication may be performed.

According to various embodiments, in the case in which a cumulative SAR satisfies an RF path change condition during a 2TX operation, an electronic device capable of changing any one of RF paths of 2TX and an operation method thereof are provided. An antenna of a changed RF path may be physically separate at least a designated distance apart from an antenna of the remaining RF path, and an SAR that affects a user may be configured to the maximum value of SARs, instead of a sum of SARs based on both RF paths. Accordingly, an increase rate of a cumulative value of SARs occurring in an electronic device may become lower than prior to the change, and backoff of a transmission power (or MTPL) in an RF path may be delayed or prevented.

According to various embodiments, the following effects are brought by any one of the above-described embodiments. For example, in the case in which the same antenna group transmits signals of the same or different technologies, a time for signal transmission at a Pmax in two transmission signals may be increased. In addition, by maintaining an RF path of a transmission signal having a high scheduling rate in association with data transmission or reception, a data loss caused by a Tx/Rx blanking time due to a switching algorithm may be prevented.

According to various embodiments, an electronic device may include a first radio frequency (RF) circuit including the first amplifier 651, a second RF circuit including the second amplifier 612, the plurality of antennas 541, 542, 543, and 544, the at least one processor 120 or 260, and the memory 130 storing instructions. The instructions, when executed by the at least one processor, may cause the electronic device to transmit first signals to a first antenna among the plurality of antennas, through a first RF path using the first RF circuit. The instructions, when executed by the at least one processor, may cause the electronic device to transmit second signals to a second antenna among the plurality of antennas through a second RF path that uses the second RF circuit. The instructions, when executed by the at least one processor, may cause the electronic device to identify that a first condition for switching an antenna based on a specific absorption rate (SAR) limit is satisfied, while concurrently transmitting the first signals and the second signals. The instructions, when executed by the at least one processor, may cause the electronic device to identify a first power difference between a maximum transmittable power of the first signals and a backoff maximum power related to SAR backoff of the first signals, and a second power difference between a maximum transmittable power of the second signals and a backoff maximum power related to SAR backoff of the second signals. The instructions, when executed by the at least one processor, may cause the electronic device to perform control so as to change the first RF path for transmitting the first signals, to a third RF path associated with a third antenna among the plurality of antennas, based on identifying that the first power difference is greater than the second power difference and that the first condition is satisfied.A first distance between the first antenna and the second antenna is less than a first threshold distance, and a distance between the first antenna and the third antenna is greater than or equal to a second threshold distance.

According to various embodiments, the second threshold distance may be equal to or greater than the first threshold distance.

According to various embodiments, a distance between at least two antennas of the device may be variable based on a configuration of the electronic device. For example the electronic device may be folded or unfolded. A third antenna may be chosen from among a plurality of candidate antennas according to the configuration of the electronic device, based at least in part upon which of the candidate antennas meets the requirement that a distance between the first antenna and the third antenna is greater than or equal to the second threshold distance.

According to various embodiments, the first condition may correspond to a value of an SAR margin, and a second condition for SAR backoff based on the specific absorption rate (SAR) limit.

According to various embodiments, the instructions, when executed by the at least one processor, may cause the electronic device to adjust a threshold set for changing, to the third RF path, the first RF path for transmitting the first signals, further based on identifying that the first power difference is greater than a first set value.

According to various embodiments, the instructions, when executed by the at least one processor, may cause the electronic device to adjust the threshold set for changing, to the third RF path, the first RF path for transmitting the first signals, further based on identifying that a difference between a strength of a signal received through the third RF path and a strength of a signal received through the first RF path is less than a second set value.

According to various embodiments, the third RF path may use the third RF circuit including a third amplifier.

According to various embodiments, the instructions, when executed by the at least one processor, may cause the electronic device to adjust the threshold set for changing, to the third RF path, the second RF path for transmitting the second signals, based on identifying that the second power difference is greater than the first power difference.

According to various embodiments, the electronic device may further include a switch configured to connect the second RF circuit with the second antenna or the third antenna, selectively.

According to various embodiments, the third RF path may use the second RF circuit including the second amplifier.

According to various embodiments, a first distance between the first antenna and the second antenna may be less than a first threshold distance.

According to various embodiments, a second distance between the first antenna and the third antenna, or a third distance between the second antenna and the third antenna may be greater than or equal to a second threshold distance.

According to various embodiments, an operation method of an electronic device including a first radio frequency (RF) circuit including a first amplifier, a second RF circuit including a second amplifier, and a plurality of antennas may include an operation of transmitting first signals to a first antenna among the plurality of antennas through a first RF path that uses the first RF circuit. The operation method of the electronic device may include an operation of transmitting second signals to a second antenna among the plurality of antennas through a second RF path that uses the second RF circuit. The operation method of the electronic device may include an operation of identifying that a first condition for switching an antenna based on a specific absorption rate (SAR) limit is satisfied, while concurrently transmitting the first signals and the second signals. The operation method of the electronic device may include an operation of identifying a first power difference between a maximum transmittable power of the first signals and a backoff maximum power related to SAR backoff of the first signals, and a second power difference between a maximum transmittable power of the second signals and a backoff maximum power related to SAR backoff of the second signals. The operation method of the electronic device may include an operation of performing control so as to change the first RF path for transmitting the first signals, to a third RF path associated with a third antenna among the plurality of antennas, based on identifying that the first power difference is greater than the second power difference and that the first condition is satisfied. A first distance between the first antenna and the second antenna is less than a first threshold distance, and a distance between the first antenna and the third antenna is greater than or equal to a second threshold distance.

According to various embodiments, the second threshold distance may be equal to or greater than the first threshold distance.

According to various embodiments, a distance between at least two antennas of the device may be variable based on a configuration of the electronic device. For example the electronic device may be folded or unfolded. A third antenna may be chosen from among a plurality of candidate antennas according to the configuration of the electronic device, based at least in part upon which of the candidate antennas meets the requirement that a distance between the first antenna and the third antenna is greater than or equal to the second threshold distance.

According to various embodiments, the first condition may correspond to a value of an SAR margin, and a second condition for SAR backoff based on the SAR limit.

According to various embodiments, the method may include an operation of adjusting a threshold set for changing, to the third RF path, the first RF path for transmitting the first signals, further based on identifying that the first power difference is greater than a first set value.

According to various embodiments, the method may include an operation of adjusting the threshold set for changing, to the third RF path, the first RF path for transmitting the first signals, further based on identifying that a difference between a strength of a signal received through the third RF path and a strength of a signal received through the first RF path is less than a second set value.

According to various embodiments, the third RF path may use the third RF circuit including a third amplifier.

According to various embodiments, the method may include an operation of adjusting the threshold set for changing, to the third RF path, the second RF path for transmitting the second signals, based on identifying that the second power difference is greater than the first power difference.

According to various embodiments, the third RF path may use the second RF circuit including the second amplifier.

According to various embodiments, a first distance between the first antenna and the second antenna may be less than a first threshold distance.

According to various embodiments, a second distance between the first antenna and the third antenna, or a third distance between the second antenna and the third antenna may be greater than or equal to a second threshold distance.

According to various embodiments, in a computer-readable storage medium storing at least one instruction, the at least one instruction, when executed by a processor of an electronic device, may cause the electronic device to perform at least one operation. The at least one operation may include an operation of transmitting first signals to a first antenna among a plurality of antennas through a first RF path that uses a first radio frequency (RF) circuit including a first amplifier. The at least one operation may include an operation of transmitting second signals to a second antenna among the plurality of antennas through a second RF path that uses a second RF circuit including a second amplifier. The at least one operation may include an operation of identifying that a first condition for switching an antenna based on a specific absorption rate (SAR) limit is satisfied, while concurrently transmitting the first signals and the second signals. The at least one operation may include an operation of identifying a first power difference between a maximum transmittable power of the first signals and a backoff maximum power related to SAR backoff of the first signals, and a second power difference between a maximum transmittable power of the second signals and a backoff maximum power related to SAR backoff of the second signals. The at least one operation may include an operation of performing control so as to change the first RF path for transmitting the first signals, to a third RF path associated with a third antenna among the plurality of antennas, based on identifying that the first power difference is greater than the second power difference and that the first condition is satisfied. A first distance between the first antenna and the second antenna is less than a first threshold distance, and a distance between the first antenna and the third antenna is greater than or equal to a second threshold distance.

According to various embodiments, the second threshold distance may be equal to or greater than the first threshold distance.

According to various embodiments, a distance between at least two antennas of the device may be variable based on a configuration of the electronic device. For example the electronic device may be folded or unfolded. A third antenna may be chosen from among a plurality of candidate antennas according to the configuration of the electronic device, based at least in part upon which of the candidate antennas meets the requirement that a distance between the first antenna and the third antenna is greater than or equal to the second threshold distance.

According to various embodiments, an electronic device comprises: a first radio frequency (RF) circuit comprising a first amplifier; a second RF circuit comprising a second amplifier; a plurality of antennas; at least one processor; and memory. The memory stores instructions that, when executed by the at least one processor, cause the electronic device to: transmit first signals to a first antenna among the plurality of antennas, through a first RF path using the first RF circuit; transmit second signals to a second antenna among the plurality of antennas, through a second RF path using the second RF circuit; while concurrently transmitting the first signals and the second signals, identify that a first condition for switching antenna based on a specific absorption rate (SAR) limit is satisfied; identify a first power difference between a maximum transmittable power of the first signals and a backoff maximum power related to SAR backoff of the first signals, and a second power difference between a maximum transmittable power of the second signals and a backoff maximum power related to SAR backoff of the second signals; and based on identifying that the first power difference is greater than the second power difference and that the first condition is satisfied, control to change the first RF path for transmitting the first signals to a third RF path associated with a third antenna among the plurality of antennas. A distance between the first antenna and the second antenna is less than a distance between the first antenna and the third antenna.

In such an embodiment, a distance between at least two antennas of the device may be variable based on a configuration of the electronic device. For example, the electronic device may be folded or unfolded. A third antenna may be chosen from among a plurality of candidate antennas according to the configuration of the electronic device, based at least in part upon which of the candidate antennas meets the requirement that a distance between the first antenna and the second antenna is less than a distance between the first antenna and the third antenna.

According to various embodiments an electronic device comprises a first radio frequency (RF) circuit comprising a first amplifier, a second RF circuit comprising a second amplifier, and a plurality of antennas. An operation method of the electronic device comprises: transmitting first signals to a first antenna among the plurality of antennas through a first RF path that uses the first RF circuit; transmitting second signals to a second antenna among the plurality of antennas through a second RF path that uses the second RF circuit; while concurrently transmitting the first signals and the second signals, identifying that a first condition for switching an antenna based on a specific absorption rate, (SAR,) limit is satisfied; identifying a first power difference between a maximum transmittable power of the first signals and a backoff maximum power related to SAR backoff of the first signals, and a second power difference between a maximum transmittable power of the second signals and a backoff maximum power related to SAR backoff of the second signals; and based on identifying that the first power difference is greater than the second power difference and that the first condition is satisfied, performing control so as to change the first RF path for transmitting the first signals, to a third RF path associated with a third antenna among the plurality of antennas. A distance between the first antenna and the second antenna is less than a distance between the first antenna and the third antenna.

In such an embodiment, a distance between at least two antennas of the device may be variable based on a configuration of the electronic device. For example, the electronic device may be folded or unfolded. A third antenna may be chosen from among a plurality of candidate antennas according to the configuration of the electronic device, based at least in part upon which of the candidate antennas meets the requirement that a distance between the first antenna and the second antenna is less than a distance between the first antenna and the third antenna.

According to various embodiments, a computer-readable storage medium stores at least one instruction which, when executed by a processor of an electronic device, causes the electronic device to perform at least one operation comprising: transmitting first signals to a first antenna among a plurality of antennas through a first RF path that uses a first radio frequency (RF) circuit comprising a first amplifier; transmitting second signals to a second antenna among the plurality of antennas through a second RF path that uses a second RF circuit comprising a second amplifier; while concurrently transmitting the first signals and the second signals, identifying that a first condition for switching an antenna based on a specific absorption rate (SAR) limit is satisfied; identifying a first power difference between a maximum transmittable power of the first signals and a backoff maximum power related to SAR backoff of the first signals, and a second power difference between a maximum transmittable power of the second signals and a backoff maximum power related to SAR backoff of the second signals; and based on identifying that the first power difference is greater than the second power difference and that the first condition is satisfied, performing control so as to change the first RF path for transmitting the first signals, to a third RF path associated with a third antenna among the plurality of antennas. A distance between the first antenna and the second antenna is less than a distance between the first antenna and the third antenna.

In such an embodiment, a distance between at least two antennas of the device may be variable based on a configuration of the electronic device. For example, the electronic device may be folded or unfolded. A third antenna may be chosen from among a plurality of candidate antennas according to the configuration of the electronic device, based at least in part upon which of the candidate antennas meets the requirement that a distance between the first antenna and the second antenna is less than a distance between the first antenna and the third antenna.

According to various embodiments an electronic device comprises: a first radio frequency (RF) circuit comprising a first amplifier; a second RF circuit comprising a second amplifier; a plurality of antennas; at least one processor; and memory. The memory stores instructions that, when executed by the at least one processor, cause the electronic device to: transmit first signals to a first antenna among the plurality of antennas, through a first RF path using the first RF circuit; transmit second signals to a second antenna among the plurality of antennas, through a second RF path using the second RF circuit; while concurrently transmitting the first signals and the second signals, identify that a first condition for switching antenna based on a specific absorption rate (SAR) limit is satisfied; identify a first power difference between a maximum transmittable power of the first signals and a backoff maximum power related to SAR backoff of the first signals, and a second power difference between a maximum transmittable power of the second signals and a backoff maximum power related to SAR backoff of the second signals; and, based on identifying that the first power difference is greater than a first set value, adjust a threshold set for changing the first RF path for transmitting the first signals to a third RF path associated with a third antenna among the plurality of antennas.

In such an embodiment the instructions, when executed by the at least one processor, may cause the electronic device to: identify that the threshold set for changing the first RF path for transmitting the first signals to the third RF path has been met; and change the first RF path for transmitting the first signals to the third RF path. The instructions, when executed by the at least one processor, may cause the electronic device to, based on identifying that a difference between a strength of a signal received through the third RF path and a strength of a signal received through the first RF path is less than a second set value, adjust the threshold set for changing the first RF path for transmitting the first signals, to the third RF path.

According to various embodiments an electronic device comprises a first radio frequency (RF) circuit comprising a first amplifier, a second RF circuit comprising a second amplifier, and a plurality of antennas. An operation method of the electronic device comprises: transmitting first signals to a first antenna among the plurality of antennas through a first RF path that uses the first RF circuit; transmitting second signals to a second antenna among the plurality of antennas through a second RF path that uses the second RF circuit; while concurrently transmitting the first signals and the second signals, identifying that a first condition for switching an antenna based on a specific absorption rate, (SAR,) limit is satisfied; identifying a first power difference between a maximum transmittable power of the first signals and a backoff maximum power related to SAR backoff of the first signals, and a second power difference between a maximum transmittable power of the second signals and a backoff maximum power related to SAR backoff of the second signals; and, based on identifying that the first power difference is greater than a first set value, adjusting a threshold set for changing the first RF path for transmitting the first signals to a third RF path associated with a third antenna among the plurality of antennas.

In such an embodiment the method may further comprise: identifying that the threshold set for changing the first RF path for transmitting the first signals to the third RF path has been met; and changing the first RF path for transmitting the first signals to the third RF path. The method may further comprise: based on identifying that a difference between a strength of a signal received through the third RF path and a strength of a signal received through the first RF path is less than a second set value, adjusting the threshold set for changing the first RF path for transmitting the first signals, to the third RF path.

According to various embodiments, a computer-readable storage medium stores at least one instruction which, when executed by a processor of an electronic device, causes the electronic device to perform at least one operation comprising: transmitting first signals to a first antenna among a plurality of antennas through a first RF path that uses a first radio frequency (RF) circuit comprising a first amplifier; transmitting second signals to a second antenna among the plurality of antennas through a second RF path that uses a second RF circuit comprising a second amplifier; while concurrently transmitting the first signals and the second signals, identifying that a first condition for switching an antenna based on a specific absorption rate (SAR) limit is satisfied; identifying a first power difference between a maximum transmittable power of the first signals and a backoff maximum power related to SAR backoff of the first signals, and a second power difference between a maximum transmittable power of the second signals and a backoff maximum power related to SAR backoff of the second signals; and, based on identifying that the first power difference is greater than a first set value, adjusting a threshold set for changing the first RF path for transmitting the first signals to a third RF path associated with a third antenna among the plurality of antennas.

In such an embodiment the instructions may further cause the electronic device to perform: identifying that the threshold set for changing the first RF path for transmitting the first signals to the third RF path has been met; and changing the first RF path for transmitting the first signals to the third RF path. The instructions may further cause the electronic device to perform: based on identifying that a difference between a strength of a signal received through the third RF path and a strength of a signal received through the first RF path is less than a second set value, adjusting the threshold set for changing the first RF path for transmitting the first signals, to the third RF path.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to "another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

**Claims**

1. An electronic device comprising:

   a first radio frequency, RF, circuit comprising a first amplifier;
   a second RF circuit comprising a second amplifier;
   a plurality of antennas;
   at least one processor; and
   memory storing instructions that, when executed by the at least one processor, cause the electronic device to:

   transmit first signals to a first antenna among the plurality of antennas, through a first RF path using the first RF circuit;
   transmit second signals to a second antenna among the plurality of antennas, through a second RF path using the second RF circuit;
   while concurrently transmitting the first signals and the second signals, identify that a first condition for switching antenna based on a specific absorption rate, SAR, limit is satisfied;
   identify a first power difference between a maximum transmittable power of the first signals and a backoff maximum power related to SAR backoff of the first signals, and a second power difference between a maximum transmittable power of the second signals and a backoff maximum power related to SAR backoff of the second signals; and
   based on identifying that the first power difference is greater than the second power difference and that the first condition is satisfied, control to change the first RF path for transmitting the first signals to a third RF path associated with a third antenna among the plurality of antennas,
   wherein a first distance between the first antenna and the second antenna is less than a first threshold distance, and a second distance between the first antenna and the third antenna is greater than or equal to a second threshold distance, the second threshold distance being greater than or equal to the first threshold distance.

2. The electronic device of claim 1, wherein the first condition corresponds to a value of SAR margin and a second condition for SAR backoff based on the SAR limit.

3. The electronic device of claim 2, wherein the instructions, when executed by the at least one processor, cause the electronic device to:
   further based on identifying that the first power difference is greater than a first set value, adjust a threshold set for changing the first RF path for transmitting the first signals to the third RF path.

4. The electronic device of claim 3, wherein the instructions, when executed by the at least one processor, cause the electronic device to:
   further based on identifying that a difference between a strength of a signal received through the third RF path and a strength of a signal received through the first RF path is less than a second set value, adjust the threshold set for changing the first RF path for transmitting the first signals, to the third RF path.

5. The electronic device of any one of claims 2 to 4, wherein the third RF path is configured to use the third RF circuit comprising a third amplifier.

6. The electronic device of any one of claims 1 to 5, wherein the instructions, when executed by the at least one processor, cause the electronic device to:
   based on identifying that the second power difference is greater than the first power difference, adjust the threshold set for changing the second RF path for transmitting the second signals to the third RF path.

7. The electronic device of claim 6, further comprising:
   a switch configured to connect the second RF circuit with the second antenna or the third antenna, selectively.

8. The electronic device of claim 7, wherein the third RF path is configured to use the second RF circuit comprising the second amplifier.

9. The electronic device of any one of claims 1 to 8, wherein a first distance between the first antenna and the second antenna is less than a first threshold distance.

10. The electronic device of any one of claims 1 to 9, wherein a second distance between the first antenna and the third antenna, or a third distance between the second antenna and the third antenna is greater than or equal to a second threshold distance.

11. An operation method of an electronic device comprising a first radio frequency, RF, circuit comprising a first amplifier, a second RF circuit comprising a second amplifier, and a plurality of antennas, the method comprising:

   transmitting first signals to a first antenna among the plurality of antennas through a first RF path that uses the first RF circuit;
   transmitting second signals to a second antenna among the plurality of antennas through a second RF path that uses the second RF circuit;
   while concurrently transmitting the first signals and the second signals, identifying that a first condition for switching an antenna based on a specific absorption rate, SAR, limit is satisfied;
   identifying a first power difference between a maximum transmittable power of the first signals and a backoff maximum power related to SAR backoff of the first signals, and a second power difference between a maximum transmittable power of the second signals and a backoff maximum power related to SAR backoff of the second signals; and
   based on identifying that the first power difference is greater than the second power difference and that the first condition is satisfied, performing control so as to change the first RF path for transmitting the first signals, to a third RF path associated with a third antenna among the plurality of antennas,
   wherein a first distance between the first antenna and the second antenna is less than a first threshold distance, and a second distance between the first antenna and the third antenna is greater than or equal to a second threshold distance, the second threshold distance being greater than or equal to the first threshold distance.

12. The method of claim 11, wherein the first condition corresponds to a value of an SAR margin, and a second condition for SAR backoff based on the SAR limit.

13. The method of claim 12, comprising:

further based on identifying that the first power difference is greater than a first set value, adjusting a threshold set for changing, to the third RF path, the first RF path for transmitting the first signals.

14. The method of claim 13, comprising:
further based on identifying that a difference between a strength of a signal received through the third RF path and a strength of a signal received through the first RF path is less than a second set value, adjusting the threshold set for changing, to the third RF path, the first RF path for transmitting the first signals.

15. A computer-readable storage medium storing at least one instruction which, when executed by a processor of an electronic device, causes the electronic device to perform at least one operation comprising:

transmitting first signals to a first antenna among a plurality of antennas through a first RF path that uses a first radio frequency, RF, circuit comprising a first amplifier;
transmitting second signals to a second antenna among the plurality of antennas through a second RF path that uses a second RF circuit comprising a second amplifier;
while concurrently transmitting the first signals and the second signals, identifying that a first condition for switching an antenna based on a specific absorption rate, SAR, limit is satisfied;
identifying a first power difference between a maximum transmittable power of the first signals and a backoff maximum power related to SAR backoff of the first signals, and a second power difference between a maximum transmittable power of the second signals and a backoff maximum power related to SAR backoff of the second signals; and
based on identifying that the first power difference is greater than the second power difference and that the first condition is satisfied, performing control so as to change the first RF path for transmitting the first signals, to a third RF path associated with a third antenna among the plurality of antennas,
wherein a first distance between the first antenna and the second antenna is less than a first threshold distance, and a second distance between the first antenna and the third antenna is greater than or equal to a second threshold distance, the second threshold distance being greater than or equal to the first threshold distance.

FIG. 1

EP 4 697 610 A1

FIG. 2A

FIG. 2B

Start

Call plurality of tables associated
with transmission powers corresponding
to plurality of points in time — 301

Identify cumulative SAR value in past,
and estimated SAR value at current
point in time and future point in
time from plurality of tables — 303

305
Does table in
which sum of cumulative SAR
value and estimated SAR value exceeds
threshold cumulative value exist?

No → 309
Transmit communication
signal with configured
transmission power

Yes

Back off transmission powers of
at least some of communication signals — 307

End

FIG. 3A

FIG. 3B

Power dBm

Time

451

401 402 403 404 405 406 407 408 409 410 411 412 413 414 415 416 417 418 419 420 421 422 423 424 425 426 427 428 429 430 431 432 433 434 435 436 437 438 439 440 441 442 443 444 445 446 447 448 449

FIG. 4A

Power dBm

~452

401 403 405 407 409 411 44 415 417 419 421 423 425 427 429 431 433 435 437 439 441 443 445 447 449

402 404 406 408 410 412 414 416 418 420 422 424 426 428 430 432 434 436 438 440 442 444 446 448

Time

FIG. 4B

EP 4 697 610 A1

43

FIG. 4C

EP 4 697 610 A1

461 462 463 460

| k th table | Past | Current | Future |
|---|---|---|---|
| | D1 | D2 | D3 |

→ D1+D2+D3 > Th ?

FIG. 4D

481    482    483                    480

k+1 th table

| Past | Current | Future |
|------|---------|--------|
| D4   | D2      | D5     |

→ D4+D2+D5 > Th ?

SAR

S1

S2

491    492    493    494

Time

# FIG. 4E

FIG. 5A

FIG. 5B

EP 4 697 610 A1

FIG. 5C

FIG. 5D

FIG. 6A

FIG. 6B

Start

Transmit first RF signal through first RF path ~ 701

Transmit second RF signal
through second RF path ~ 703

Identify sum of first cumulative
SAR corresponding
to first RF path and second cumulative
SAR corresponding to second RF path ~ 705

Does sum
satisfy designated backoff
condition? — 707

No

Yes

Back off maximum transmission power
limit for any one RF path between
first RF path and second RF path ~ 709

End

FIG. 7A

FIG. 7B

| LTE K1=4, K2=4 | | | | | | | | | | | | | | | |
|---|---|---|---|---|---|---|---|---|---|---|---|---|---|---|---|
| Slot | 0 | 1 | 2 | 3 | 4 | 5 | 6 | 7 | 8 | 9 | 10 | 11 | | | |
| RX | D | D | D | RX blanking | | D | D | D | D | D | D | D | | | |
| TX | U | U | U | TX blanking | | U | U | No DIC information due to 3/4 slot Rx blanking PUSCH X | | U | U | U | | | |
| | RX ACK + PUSCH | RX ACK + PUSCH | RX ACK + PUSCH | - | - | Slot number 1 RX ACK + PUSCH | Slot number 2 RX ACK + PUSCH | - | - | Slot number 7 RX ACK + PUSCH | Slot number 8 RX ACK + PUSCH | Slot number 9 RX ACK + PUSCH | | | |

| NR K1=4, K2=4 | | | | | | | | | | | | | | | |
|---|---|---|---|---|---|---|---|---|---|---|---|---|---|---|---|
| Slot | 0 | 1 | 2 | 3 | 4 | 5 | 6 | 7 | 8 | 9 | 10 | 11 | 12 | 13 | 14 |
| RX | D | D | D | RX blanking | | | | | | | D | D | D | D | D |
| TX | U | U | U | TX blanking | | | | | | | RX blank | | | | U |
| | RX ACK + PUSCH | RX ACK + PUSCH | RX ACK + PUSCH | - | - | - | - | - | - | - | - | - | - | - | Slot number 10 RX ACK + PUSCH |

FIG. 8A

FIG. 8B

**FIG. 9A**

**FIG. 9B**

GroupB
LTE B5 2nd Tx Ant

GroupB
LTE n2 2nd Tx Ant

1012

1022

NSA 5G UE

1011

1021

GroupA
LTE B5 1st Tx Ant

GroupA
LTE n2 1st Tx Ant

FIG. 10

Start

Transmit first signals through
first RF path that uses first RF circuit — 1102

Transmit second signals through
second RF path that uses second RF circuit — 1104

At first point in time, identify that condition for SAR
backoff is to be satisfied after predetermined time elapses — 1106

Based on maximum transmittable power of
first signals and backoff maximum power
related to SAR backoff, identify first power difference — 1108

Based on maximum transmittable power of
second signals and backoff maximum power related to
SAR backoff, identify second power difference — 1110

Based on first power difference and second power
difference, adjust threshold value set for changing
RF path for transmitting first signals or second signals — 1112

End

# FIG. 11

**Start**

UE Network Connection — 1202

1204
Do 2Tx chains use same antenna group? — No

Yes

1206
Is it point in time for backoff since SAR margin is insufficient? — No → Perform basic operation 1216

Yes

Compare $1^{st}$ and $2^{nd}$ Tx chain power delta 1208

Move chain having high Tx chain power delta to another Ant group, and secure Pmax transmission time 1210

1212
Are 2Tx chains used in same Ant group? — No → Perform basic operation 1214

Yes

**End**

## FIG. 12

Start

UE Network Connection — 1302

1304
Do 2Tx chains
use same antenna group? — No

Yes

1306
Is it point in
time for backoff since SAR
margin is insufficient? — No → Perform basic operation — 1320

Yes

1308
Do both LTE tech
and NR tech transmit data in
split bearer structure? — No

Yes

1310
Is it point
in time for controlling power
backoff for RF chain that processes
large amount of data
among RF chains? — No

Yes

1314
Move anchor that merely exchanges
control message or RF chain
allocated with low amount of
scheduling to another antenna group

1316
Are 2Tx chains used
in same Ant group? — No → Perform basic operation — 1318

Yes

End

FIG. 13

Start

UE Network RRC Idle Connection — 1402

1404

Do 2Tx chains use same antenna group? —— No

Yes

1406

Only act as LTE anchor in NSA split bearer structure? —— No

Yes

1408

Does LTE anchor receive no control message? —— No

Yes 1410

Select LTE chain that does not transmit data as default path for another antenna group

1412

Are 2Tx chains used in same Ant group? —— No → Perform basic operation — 1414

Yes

End

FIG. 14

Start

UE Network RRC Idle Connection ~1502

1504

Do 2Tx chains
use same antenna group?  —No→

Yes

1506

Do 2
technologies transmit
or receive data in NSA split
bearer structure?  —No→

Yes

Identify scheduling rate and BW
information for each Tx chain,
and identify Tx chain
having highest data rate  /1508

Preferentially allocate default path
so that Tx chain having highest
data rate uses Tx chain of antenna
group having highest Plimit  /1510

1512

Are 2Tx chains
used in same Ant group?  —No→  Perform basic operation  1514

Yes

End

FIG. 15

FIG. 16

1720 GroupB
LTE B5 2<sup>nd</sup> Tx Ant

1740 GroupD
LTE B2 2<sup>nd</sup> Tx Ant

GroupA
LTE B5 1<sup>st</sup> Tx Ant
1710

GroupC
LTE B2 1<sup>st</sup> Tx Ant
1730

FIG. 17A

FIG. 17B

## INTERNATIONAL SEARCH REPORT

| International application No. |
|---|
| **PCT/KR2025/007556** |

### A. CLASSIFICATION OF SUBJECT MATTER

**H04B 1/40**(2006.01)i; **H04B 7/06**(2006.01)i; **H04B 1/3827**(2015.01)i; **H04B 17/20**(2015.01)i; **H04W 52/36**(2009.01)i; **H04B 1/04**(2006.01)i

According to International Patent Classification (IPC) or to both national classification and IPC

### B. FIELDS SEARCHED

Minimum documentation searched (classification system followed by classification symbols)

H04B 1/40(2006.01); H04B 1/3827(2015.01); H04B 7/0404(2017.01); H04B 7/0456(2017.01); H04B 7/06(2006.01); H04L 5/00(2006.01); H04W 52/36(2009.01); H04W 52/44(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SAR(specific absorption rate), 백오프(backoff), 안테나(antenna), 스위칭 (switching), 최대(maximum), 전력(power), 경로(path), 임계(threshold), 거리(distance)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0106478 A (SAMSUNG ELECTRONICS CO., LTD.) 13 July 2023 (2023-07-13) paragraphs [0015], [0064]-[0065], [0075]-[0082], [0089], [0099] | 1-2,5,9-12,15 |
| Y | | 3-4,6-8,13-14 |
| Y | WO 2022-251774 A1 (QUALCOMM INCORPORATED) 01 December 2022 (2022-12-01) paragraph [0056] | 3-4,6-8,13-14 |
| A | US 2023-0403053 A1 (QUALCOMM INCORPORATED) 14 December 2023 (2023-12-14) paragraphs [0026]-[0113]; and figures 1-8 | 1-15 |
| A | KR 10-2023-0168083 A (SAMSUNG ELECTRONICS CO., LTD.) 12 December 2023 (2023-12-12) paragraphs [0012]-[0173]; and figures 1-16 | 1-15 |
| A | US 2022-0166466 A1 (QUALCOMM INCORPORATED) 26 May 2022 (2022-05-26) paragraphs [0019]-[0116]; and figures 1-12 | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 September 2025** | **03 September 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/007556**

| Patent document cited in search report | | | Publication date (day/month/year) | Patent family member(s) | | | Publication date (day/month/year) |
|---|---|---|---|---|---|---|---|
| KR | 10-2023-0106478 | A | 13 July 2023 | US | 2024-0357518 | A1 | 24 October 2024 |
| | | | | WO | 2023-132448 | A1 | 13 July 2023 |
| WO | 2022-251774 | A1 | 01 December 2022 | CN | 117322067 | A | 29 December 2023 |
| | | | | EP | 4349083 | A1 | 10 April 2024 |
| | | | | US | 12143947 | B2 | 12 November 2024 |
| | | | | US | 2022-0386249 | A1 | 01 December 2022 |
| US | 2023-0403053 | A1 | 14 December 2023 | CN | 116195306 | A | 30 May 2023 |
| | | | | EP | 4222876 | A1 | 09 August 2023 |
| | | | | US | 11817926 | B2 | 14 November 2023 |
| | | | | US | 12149310 | B2 | 19 November 2024 |
| | | | | US | 2022-0103214 | A1 | 31 March 2022 |
| | | | | US | 2025-0062804 | A1 | 20 February 2025 |
| | | | | WO | 2022-072985 | A1 | 07 April 2022 |
| KR | 10-2023-0168083 | A | 12 December 2023 | CN | 119384847 | A | 28 January 2025 |
| | | | | EP | 4456616 | A1 | 30 October 2024 |
| | | | | US | 2023-0397132 | A1 | 07 December 2023 |
| | | | | WO | 2023-234559 | A1 | 07 December 2023 |
| US | 2022-0166466 | A1 | 26 May 2022 | BR | 112022003210 | A2 | 17 May 2022 |
| | | | | CN | 114258712 | A | 29 March 2022 |
| | | | | CN | 114258712 | B | 31 May 2024 |
| | | | | CN | 118433838 | A | 02 August 2024 |
| | | | | EP | 4022791 | A1 | 06 July 2022 |
| | | | | EP | 4022791 | B1 | 09 April 2025 |
| | | | | EP | 4529038 | A2 | 26 March 2025 |
| | | | | JP | 2022-546352 | A | 04 November 2022 |
| | | | | JP | 2024-152734 | A | 25 October 2024 |
| | | | | JP | 7528193 | B2 | 05 August 2024 |
| | | | | KR | 10-2022-0054298 | A | 02 May 2022 |
| | | | | PH | 12022550258 | A1 | 26 June 2023 |
| | | | | US | 11271612 | B2 | 08 March 2022 |
| | | | | US | 11750248 | B2 | 05 September 2023 |
| | | | | US | 2021-0067209 | A1 | 04 March 2021 |
| | | | | WO | 2021-041947 | A1 | 04 March 2021 |

Form PCT/ISA/210 (patent family annex) (July 2022)